(19) Europäisches Patentamt
European Patent Office
Office européen des brevets

(11) **EP 2 634 550 A1**

(12) **EUROPEAN PATENT APPLICATION**
published in accordance with Art. 153(4) EPC

(43) Date of publication:
04.09.2013 Bulletin 2013/36

(21) Application number: 11835917.3

(22) Date of filing: 26.07.2011

(51) Int Cl.:
*G01J 3/45* (2006.01)

(86) International application number:
**PCT/JP2011/066925**

(87) International publication number:
**WO 2012/056776 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 JP 2010239146**

(71) Applicant: **Konica Minolta, Inc.**
**Tokyo 100-7015 (JP)**

(72) Inventor: **HARA Yoshihiro**
**Hino-Shi**
**Tokyo 191-8511 (JP)**

(74) Representative: **HOFFMANN EITLE**
**Patent- und Rechtsanwälte**
**Arabellastrasse 4**
**81925 München (DE)**

(54) **METHOD FOR CORRECTING TILT IN SPECTROSCOPE**

(57) In a rough adjustment step before spectroscopic analysis, a moving mirror is moved (#1), the outputs of division elements when the interfering light of reflected light off the moving mirror and reflected light off a fixed mirror is received by a four-division sensor are totalized and variations in the contrast of the interfering light are detected (#12), and, based on the variations in the contrast, the amount of relative tilt of the two reflected light beams is detected (#13), and the initial tilt error is corrected (#14). On the other hand, in a fine adjustment step before the spectroscopic analysis, based on a phase difference between the outputs of the division elements when the interfering light of the two reflected light beams is received by the four-division sensor, the relative tilt amount of and the tilt direction of the two reflected light beams are detected, and the initial tilt error is corrected.

FIG.27

EP 2 634 550 A1

## Description

### Technical Field

The present invention relates to a tilt correction method of correcting, in a spectroscope, a tilt error between a light beam reflected off a moving mirror and a light beam reflected off a fixed mirror.

### Background Art

In a Michelson two-beam interferometer utilized in FTIR (Fourier transform infrared spectroscopy), a configuration is adopted in which infrared light emitted from a light source is divided by a beam splitter in two directions toward a fixed mirror and a moving mirror, and the light beam that is reflected off the fixed mirror and is returned and the light beam that is reflected off the moving mirror and is retuned are combined by the beam splitter into one optical path. When the moving mirror is moved forward and backward (in the direction of the optical axis of incident light), the difference between the optical paths of the two divided beams is changed, and thus the combined light becomes interfering light (interferogram) in which the intensity of the light is changed according to the amount of movement of the moving mirror. This interferogram is sampled and is subjected to A/D conversion and Fourier transform, and thus it is possible to determine the spectrum distribution of the incident light, with the result that it is possible to determine, from the spectrum distribution, the intensity of the interfering light of each wave number (1 / wavelength).

In order to achieve high performance in the FTIR as described above, it is preferable to maintain an optimum interference efficiency in the interferometer. Hence, it is necessary to keep constant each of the angular relationship between the fixed mirror and the beam splitter and the angular relationship between the moving mirror and the beam splitter. In other words, when the light beam reflected off the moving mirror and the light beam reflected off the fixed mirror are displaced from an angle at which the optimum interference occurs and interfere with each other, the contrast of the interfering light is reduced, and thus it is impossible to perform the spectroscopic analysis with high accuracy. Hence, it is necessary to correct the angular displacement of the two reflected light beams described above. For ease of description, the angular displacement described above is also referred to as a tilt error, and the correction of the angular displacement is also referred to as tilt correction.

In this respect, for example, in the device of patent document 1, even if the interference state is degraded by an impact or vibrations during transportation, the angle of a fixed mirror is adjusted before a spectroscopic measurement and thus tilt correction is performed, with the result that it is possible to restore the interference state.

### Related Art Document

### Patent Document

Patent document 1: JP-A-2004-28609 (see claim 1, paragraphs [0016] to [0020] and the like)

### Disclosure of the Invention

### Problems to be Solved by the Invention

Incidentally, there are two types of tilt errors. One is an initial tilt error before a spectroscopic measurement, and includes a tilt error caused by aging variation, an impact or vibrations and a tilt error caused by the expansion and contraction of a member at the time of temperature change. The other is a tilt error caused when a moving mirror is translated and driven during the spectroscopic measurement.

In patent document 1, as described above, the initial tilt error before the spectroscopic measurement is corrected, and furthermore, this initial tilt error is corrected in two stages (see paragraphs [0016] and [0017]). Specifically, in the first stage, while the amplitude of outputs from division elements when laser interfering light (laser fringe) is detected with a light detector (four-division sensor) is being detected, the fixed mirror is tilted with a predetermined procedure such that the amplitude is maximized. Then, when the position of the fixed mirror that results in the maximum of the amplitude is found, in the second stage, with such a position in the center, the position of the fixed mirror is adjusted again based on the phase difference between the outputs from the division elements.

However, in the first stage, it seems that, while the amplitude of the individual outputs of the four division elements or the amplitude of an output of one division element is being detected, the fixed mirror is tilted. In this case, since the light reception area of each of the division elements is naturally less than the light reception area of the entire four-division sensor, in the output of each of the division elements, the amount of variation in the amplitude (contrast) with variations in the tilt (the amount of tilt) of the fixed mirror is more than the amount of variation in the amplitude of an output (the total of the outputs of the four division elements) obtained by regarding the entire four-division sensor as one sensor. Hence, when the fixed mirror is excessively tilted, it may be impossible to detect the amplitude, and the tilt of the fixed mirror is limited. Therefore, in the configuration of patent document 1, when the initial tilt error is large, it is disadvantageously impossible to correct such a large initial tilt error.

The present invention is made to solve the above problem; an object of the present invention is to provide a tilt correction method with which, even if an initial tilt error before a spectroscopic measurement is large, it is possible to reliably correct such a large initial tilt error.

**Means for Solving the Problem**

According to the present invention, there is provided a tilt correction method of correcting a tilt error between a light beam reflected off a moving mirror and a light beam reflected off a fixed mirror in a spectroscope, the tilt correction method including: an initial adjustment step that is performed before a spectroscopic measurement and that includes: a rough adjustment step of detecting and correcting an initial tilt error of the reflected light beams; and a fine adjustment step of more finely detecting and correcting the initial tilt error than the rough adjustment step; and a dynamic alignment step that is performed during the spectroscopic measurement and that detects and corrects a tilt error of the reflected light beams caused by movement of the moving mirror, where, in the rough adjustment step, laser light is separated into two portions and the two portions are respectively guided to the moving mirror and the fixed mirror, and outputs of division elements when interfering light of the light beam reflected off the moving mirror and the light beam reflected off the fixed mirror is, while the moving mirror is being moved, received by a four-division sensor are totalized, and variations in contrast of the interfering light are detected, and based on the variations in the contrast, a relative tilt amount of the reflected light beams is detected and the initial tilt error is corrected, and in the fine adjustment step, based on a phase difference between the outputs of the division elements when the interfering light of the reflected light beams is received by the four-division sensor, the relative tilt amount of and a tilt direction of the reflected light beams are detected, and the initial tilt error is corrected.

**Advantages of the Invention**

In the present invention, in the rough adjustment step, the outputs of the division elements are totalized, and thus variations in the contrast of the interfering light are detected, and thus it is possible to widen the range of the detection of variations in the amount of tilt of the two reflected light beams based on the variations in the contrast of the interfering light. In this way, even when the initial tilt error is large by aging variation or the like, in the rough adjustment step, it is possible to reliably detect and correct such a large initial tilt error.

**Brief Description of Drawings**

[Fig. 1] An illustrative diagram schematically showing a schematic configuration of a Fourier transform spectroscopic analysis device according to an embodiment of the present invention;
[Fig. 2] A plan view showing a schematic configuration of a second light detector of an interferometer applied to the Fourier transform spectroscopic analysis device;
[Fig. 3] An illustrative diagram showing a phase signal output based on the results of detection by the second light detector;
[Fig. 4] A perspective view showing a schematic configuration of a moving mirror drive mechanism included in the interferometer of the Fourier transform spectroscopic analysis device;
[Fig. 5] A cross-sectional view of the moving mirror drive mechanism;
[Fig. 6] An illustrative diagram showing a schematic configuration of a drive portion of the moving mirror drive mechanism and a method of displacing a rigid member and a moving mirror;
[Fig. 7] A graph showing a relationship between a ratio of the length of a flat plate portion of a plate spring portion of the moving mirror drive mechanism to the length of a piezoelectric element and an application voltage to the drive portion;
[Fig. 8] A perspective view showing yet another configuration of the moving mirror drive mechanism;
[Fig. 9] A cross-sectional view of the moving mirror drive mechanism of Fig. 8;
[Fig. 10] A cross-sectional view showing yet another configuration of the moving mirror drive mechanism;
[Fig. 11] A cross-sectional view showing yet another configuration of the moving mirror drive mechanism;
[Fig. 12] A flowchart showing, in the moving mirror drive mechanism of Fig. 11, the flow of an operation through voltage control in an initial operation;

[Fig. 13] A flowchart showing, in the moving mirror drive mechanism of Fig. 11, the flow of an operation through voltage control in a steady operation;
[Fig. 14] A cross-sectional view showing yet another configuration of the moving mirror drive mechanism;
[Fig. 15] A cross-sectional view showing yet another configuration of the moving mirror drive mechanism;
[Fig. 16] A cross-sectional view showing yet another configuration of the moving mirror drive mechanism;
[Fig. 17] A cross-sectional view showing yet another configuration of the moving mirror drive mechanism;
[Fig. 18] An illustrative diagram showing, in the moving mirror drive mechanism of Fig. 4, a relationship between the displacement of the moving mirror and the amount of tilt error in a pitch direction (tilt angle);
[Fig. 19] An illustrative diagram showing, in the moving mirror drive mechanism of Fig. 4, a relationship between the displacement of the moving mirror and the amount of tilt error in a roll direction (tilt angle);
[Fig. 20] Fig. 20(a) is an illustrative diagram showing the pitch direction, and Fig. 20(b) is an illustrative diagram showing the roll direction;
[Fig. 21] Fig. 21(a) is a side view showing a schematic configuration of an optical path correction device of the interferometer, and Fig. 21(b) is a plan view of a fixed mirror supported by the optical path correction device;
[Fig. 22] A block diagram showing feedback control performed when the fixed mirror is non-resonantly driven;
[Fig. 23] Fig. 23(a) is a plan view showing another configuration of the optical path correction device, and Fig. 23 (b) is a side view of the optical path correction device; [Fig. 24] A bottom view of a rotational member of the optical path correction device as seen from the side of the piezoelectric element;
[Fig. 25] A side view of the optical path correction device before and after the rotation of the rotational member;
[Fig. 26] A flowchart showing a rough flow of a tilt correction method of the present embodiment;
[Fig. 27] A flowchart showing the detailed flow of a rough adjustment step of an initial adjustment step in the tilt correction method;
[Fig. 28] An illustrative diagram showing a relationship between the relative tilt of a light beam reflected off the moving mirror with respect to a light beam reflected off the fixed mirror and the contrast here;
[Fig. 29] An illustrative diagram showing a relationship between the relative tilt of the two reflected light beams and the contrast of interfering light detected by totalizing the outputs of the division elements of the four-division sensor, and a relationship between the relative tilt of the two reflected light beams and the contrast of interfering light detected only from the output of one division element;
[Fig. 30] A flowchart showing the detailed flow of a fine adjustment step of the initial adjustment step;
[Fig. 31] An illustrative diagram showing a relationship between the relative tilt of the two reflected light beams in the pitch direction and a phase difference between the outputs of two division elements adjacent in a direction corresponding to the pitch direction; and
[Fig. 32] A flowchart showing the detailed flow of a dynamic alignment step in the tilt correction method.

**Best Mode for Carrying Out the Invention**

An embodiment of the present invention will be described below with reference to accompanying drawings.

[1. Configuration of a Fourier transform spectroscopic analysis device]

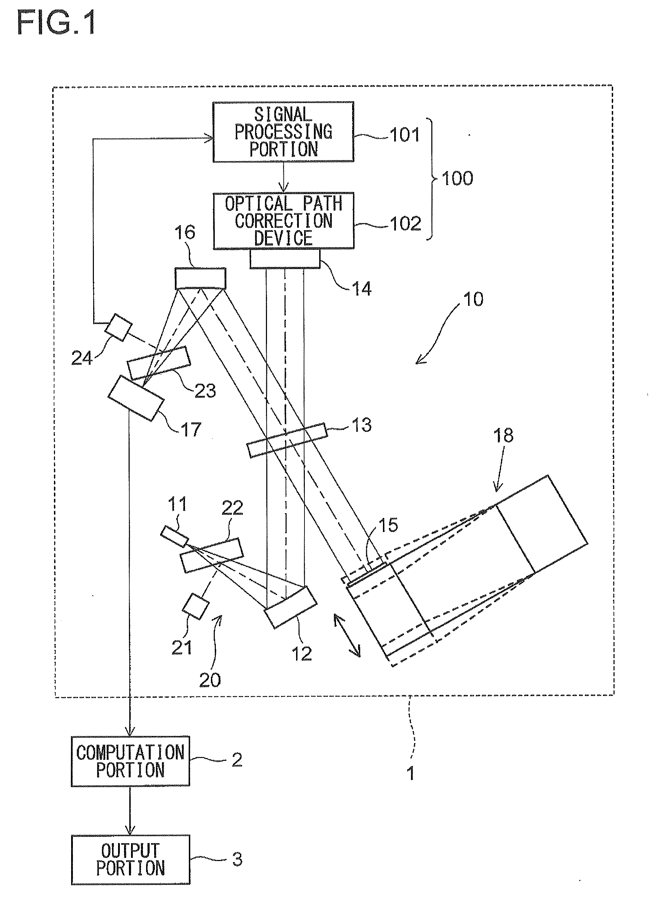

Fig. 1 is an illustrative diagram schematically showing a schematic configuration of a Fourier transform spectroscopic analysis device serving as the spectrometer of the present embodiment. This device is a device that utilizes the principles of a Michelson interferometer to disperse measurement light, and is configured to include an interferometer 1, a computation portion 2 and an output portion 3. The interferometer 1 is formed with a two-optical path branch type Michelson interferometer, the details of which will be described later. The computation portion 2 performs sampling, A/D conversion and Fourier transform on a signal output from the interferometer 1 and generates the spectrum of wavelengths included in the measurement light, that is, the spectrum indicating the intensity of light of each wave number (1 / wavelength). The output portion 3 outputs (for example, displays) the spectrum generated in the computation portion 2. The details of the interferometer 1 will be described below.
The interferometer 1 includes a first optical system 10, a second optical system 20 and a tilt correction portion 100. They will be described in turn
The first optical system 10 includes a measurement light input portion 11, a reflective collimator 12, a BS (beam splitter) 13, a fixed mirror 14, a moving mirror 15, a reflective collimator 16, a first light detector 17 and a drive mechanism 18. The positional relationship between the fixed mirror 14 and the moving mirror 15 with respect to the BS 13 may be reversed. A correction plate for correcting the length of an optical path corresponding to the thickness of the BS 13 may be provided in the optical path.
Light (measurement light, near-infrared light) emitted from an unillustrated light source and passing through or reflected off a specimen enters the measurement light input portion 11. The reflective collimator 12 is formed with a reflective surface (collimate optical system) that reflects and collimates the light from the measurement light input portion 11 and that guides it to the BS 13. The BS 13 separates the incident light, that is, the light emitted from the measurement light input portion 11, into two types of light, guides them to the fixed mirror 14 and the moving mirror 15, combines the light reflected off the fixed mirror 14 and the light reflected off the moving mirror 15 and emits the resulting light as the first interfering light; for example, the BS 13 is formed with a half mirror.

The reflective collimator 16 is formed with a reflective surface (light collection optical system) that reflects and collects the light combined and emitted by the BS 13 and that guides it to the first light detector 17. The first light detector 17 receives the first interfering light entering through the reflective collimator 16 and detects an interferogram (interference pattern). The reflective collimators 12 and 16 described above may be collimator lens.

The drive mechanism 18 is a moving mirror drive mechanism which moves (translates) the moving mirror 15 parallel to the direction of the optical axis of the incident light such that the difference (the difference in the length of the optical paths) between the optical path of the light reflected off the fixed mirror 14 and the optical path of the light reflected off the moving mirror 15 is changed. In the present embodiment, the drive mechanism 18 is formed with a parallel plate spring type drive mechanism, the details of which will be described later.

In the configuration described above, the light (measurement light) emitted from the measurement light input portion 11 is collimated by the reflective collimator 12, and is then separated into two light beams by passing through and being reflected off the BS 13. One separated light beam is reflected off the moving mirror 15, and the other light beam is reflected off the fixed mirror 14, and the light beams travel back in the original optical paths, and are superimposed in the BS 13, with the result that the light beams become the first interfering light. Here, the moving mirror 15 is continuously moved by the drive mechanism 18; when the difference between the lengths of the optical paths from the BS 13 to the mirrors (the moving mirror 15 and the fixed mirror 14) is an integral multiple of the wavelength, the intensity of the superimposed light is the greatest. On the other hand, when the movement of the moving mirror 15 causes a difference between the lengths of the two optical paths, the intensity of the superimposed light is changed. The first interfering light is collected by the reflective collimator 16 and enters the first light detector 17, where the first interfering light is detected as an interferogram.

The computation portion 2 performs sampling, A/D conversion and Fourier transform on a detection signal (interferogram) from the first light detector 17 and thereby generates a spectrum indicating the intensity of light of each wave number. The spectrum described above is output (for example, displayed) by the output portion 3, and it is possible to analyze, based on this spectrum, the properties of the specimen (such as the material, the structure and the amount of component).

The second optical system 20 and the tilt correction portion 100 will now be described. The second optical system 20 shares part of the configuration of the first optical system 10 described above, and includes, in addition to the reflective collimator 12, the BS 13, the fixed mirror 14, the moving mirror 15 and the reflective collimator 16 described above, a reference light source 21, an optical path combination mirror 22, an optical path separation mirror 23 and a second light detector 24.

The reference light source 21 is a light source for detecting the position of the moving mirror 15 and for generating a timing signal for the sampling in the computation portion 2, and is formed with a semiconductor laser that emits, for example, red light having a wavelength of about 660 nm as reference light. In other words, the semiconductor laser forming the reference light source 21 emits laser light having a wavelength shorter than the shortest wavelength of the light (near-infrared light) emitted from the measurement light input portion 11. As the reference light source 21, a semiconductor laser is used, and thus it is possible to reduce the size of the interferometer 1 as compared with the configuration in which a large-sized He-Ne laser is used.

The optical path combination mirror 22 is an optical axis combination beam combiner that transmits the light from the measurement light input portion 11 and reflects the light from the reference light source 21 and thereby combines the optical paths of these types of light into the same optical path. The optical path separation mirror 23 is a beam splitter that transmits the light emitted from the measurement light input portion 11 and entering the optical path separation mirror 23 through the BS 13 and the fixed mirror 14 (or the BS 13 and the moving mirror 15), that reflects the light emitted from the reference light source 21 and entering the optical path separation mirror 23 through the BS 13 and the fixed mirror 14 (or the BS 13 and the moving mirror 15) and that thereby separates the optical paths of these types of light.

The second light detector 24 detects light (second interfering light, reference interfering light) emitted from the reference light source 21, entering the optical path separation mirror 23 through the BS 13 and the fixed mirror 14 (or the BS 13 and the moving mirror 15) and reflected off the optical path separation mirror 23, and is formed with, for example, a four-division sensor (SPD: silicon photo diode).

The tilt correction portion 100 performs, on the fixed mirror 14, a drive for correcting the relative tilt (an angular displacement from the optimal interference state) of the light beam reflected off the moving mirror 15 with respect to the light beam reflected off the fixed mirror 14 caused by the tilt of the moving mirror 15 at the time of drive by the drive mechanism 18. Hereinafter, the relative tilt of the light beam reflected off the moving mirror 15 with respect to the light beam reflected off the fixed mirror 14 caused by the tilt of the moving mirror 15 at the time of the movement thereof is also referred to as the tilt (tilt error) of light between the two optical paths.

Incidentally, in the present embodiment, the two optical paths, that is, the optical path along which one light beam separated by the BS 13 is reflected off the moving mirror 15 and enters the BS 13 again and the optical path along which the other light beam separated by the BS 13 is reflected off the fixed mirror 14 and enters the BS 13 again, are shared (coaxial) by the first optical system 10 and the second optical system 20. In this configuration, (1) the relative tilt (hereinafter also referred to as first tilt) between light travelling through the measurement light input portion 11, the BS 13, the moving mirror 15, the BS 13 and the first light detector 17 in this order and light travelling through the measurement light input portion 11, the BS 13, the fixed mirror 14, the BS 13 and the first light detector 17 in this order and (2) the relative tilt (hereinafter also referred to as second tilt) between light travelling through the reference light source 21, the BS 13, the moving mirror 15, the BS 13 and the second light detector 24 in this order and light travelling through the reference light source 21, the BS 13, the fixed mirror 14, the BS 13 and the second light detector 24 in this order are the same. Hence, the tilt correction portion 100 detects the second tilt based on the light reception signal of the second interfering light from the second light detector 24, and thereby becomes equivalent to the one which detects the first tilt, and can correct the first tilt based on the results of the detection.

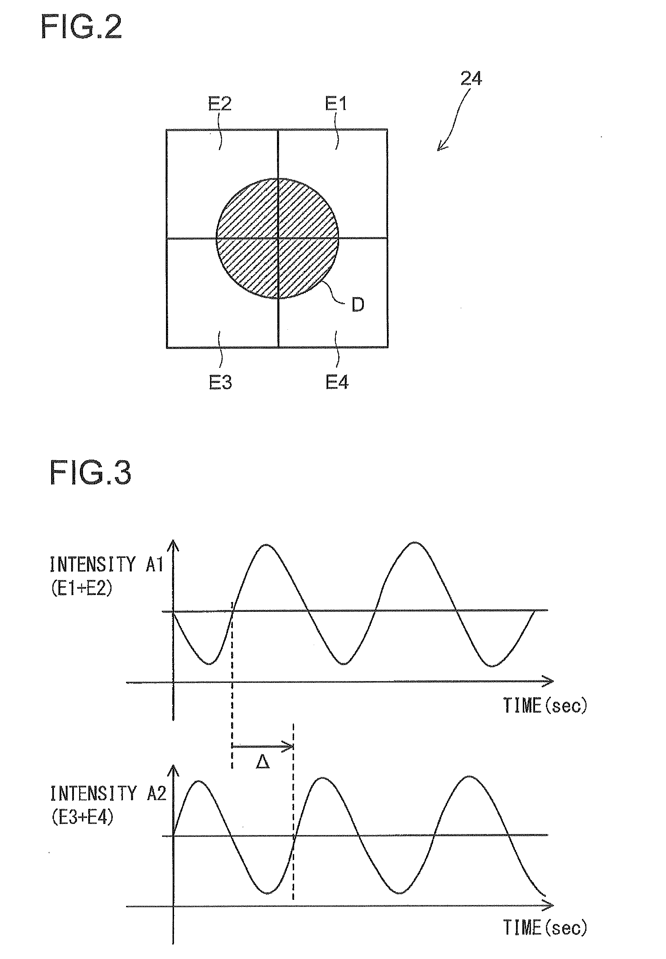

Specifically, the tilt correction portion 100 described above is formed with a signal processing portion 101 and an optical path correction device 102. The signal processing portion 101 detects the tilt of the light between the two optical paths based on the intensity of the second interfering light detected by the second light detector 24. For example, as shown in Fig. 2, it is assumed that the four light reception regions of the second light detector 24 are E1 to E4 as seen in a counterclockwise direction, and that the light spot D of the second interfering light is located in the center of the entire light reception region. When it is assumed that the sum of the intensities of the light detected in the light reception regions E1 and E2 is A1 and the sum of the intensities of the light detected in the light reception regions E3 and E4 is A2, if signals shown in Fig. 3 are obtained as phase signals indicating variations in the intensities A1 and A2 with time, it is possible to detect, based on these signals, the tilt of light (the direction of relative tilt and the amount of tilt) between the two optical paths. In this example, in the direction (the up/down direction of Fig. 2) in which the light reception regions E1 and E2 and the light reception regions E3 and E4 are aligned, the tilt of the light between the two optical paths occurs only by an angle corresponding to a phase difference $\Delta$. The intensity in the vertical axis of Fig. 3 is indicated as a relative value. When the frequency of the phase signal is slow (low), it is also possible to detect the tilt of the light between the two optical paths not from phase comparison but from an intensity ratio.

Even if the light spot D of the second interfering light is not located in the center of the entire light reception region (even if the light spot D is displaced from the center of the light reception surface), since the intensity of received light differs depending on the location of the light reception surface, it is possible to detect the tilt of the light between the two optical paths from the intensity ratio of the light reception regions. For example, a ratio (first ratio) between the sum of the intensities of the light detected in the light reception regions E 1 and E2 and the sum of the intensities of the light detected in the light reception regions E3 and E4 and a ratio (second ratio) between the sum of the intensities of the light detected in the light reception regions E1 and E4 and the sum of the intensities of the light detected in the light reception regions E2 and E3 are determined, and the first ratio and the second ratio are compared, and thus it is possible to detect the tilt of the light between the two optical paths.

As described above, the second light detector 24 is formed with the four-division sensor, and thus the tilt correction portion 100 (the signal processing portion 101) can reliably detect the tilt of the light between the two optical paths based on the signals from the regions (the division elements) of the four-division sensor.

The tilt correction portion 100 (the signal processing portion 101) may detect the tilt of the light (the tilt angle, the direction of tilt) between the two optical paths based on the phase difference between an output from one region of the four-division sensor and an output from another region thereof. Even in this case, since a signal similar to that of Fig. 3 is output from each of the regions, it is possible to detect the tilt of the light between the two optical paths with the same method as described above.

The signal processing portion 101 detects the position of the moving mirror 15 based on the intensity of the second interfering light detected in the second light detector 24, and generates a pulse signal indicating the timing of the sampling. The computation portion 2 described above samples the detection signal (interferogram) from the first light detector 17 in synchronization with the timing when the pulse signal is generated, and converts it into digital data. Since, in the second light detector 24, the intensity of the second interfering light totally changes between light and dark according to the position (the difference in the optical paths) of the moving mirror, the intensity is detected, and thus it is possible to detect the position of the moving mirror 15.

Based on the tilt of the light between the two optical paths detected by the signal processing portion 101, the optical path correction device 102 corrects the optical path of the light reflected off the fixed mirror 14 to correct the tilt of the light between the two optical paths, the details of which will be described later.

In the configuration described above, the light (reference light) emitted from the reference light source 21 is reflected off the optical path combination mirror 22 and is collimated by the reflective collimator 12, and then enters the BS 13, where the light is separated into two light beams. One light beam separated by the BS 13 is reflected off the moving mirror 15, and the other light beam is reflected off the fixed mirror 14, and the light beams travel back in the original optical paths, and are superimposed in the BS 13, with the result that the beams become the second interfering light. Thereafter, the second interfering light is reflected and collected by the reflective collimator 16, is reflected off the optical path separation mirror 23 and enters the second light detector 24.

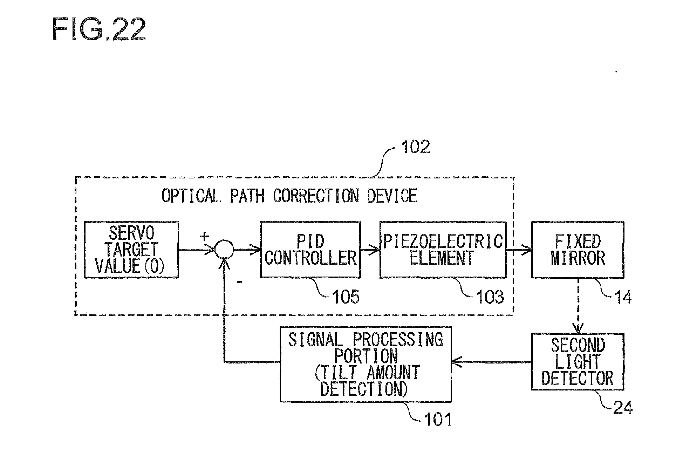

As described above, the signal processing portion 101 of the tilt correction portion 100 detects the tilt of the light between the two optical paths based on the intensity of the second interfering light detected by the second light detector 24, and the optical path correction device 102 adjusts the posture (the angle with respect to the BS 13) of the fixed mirror 14 based on the results of the detection by the signal processing portion 101 and corrects the optical path of the reflected light off the fixed mirror 14. Feedback control (see Fig. 22) of repeating the correction of the optical path of the reflected light and the detection of the tilt of the light between the two optical paths is performed, and thus it is possible to finally make the tilt of the light between the two optical paths close to zero without any limit. In this way, it is possible to prevent the decrease in the contrast of the first interfering light detected by the first light detector 17.

[2. Drive mechanism of the moving mirror]

(2-1. Overall configuration)

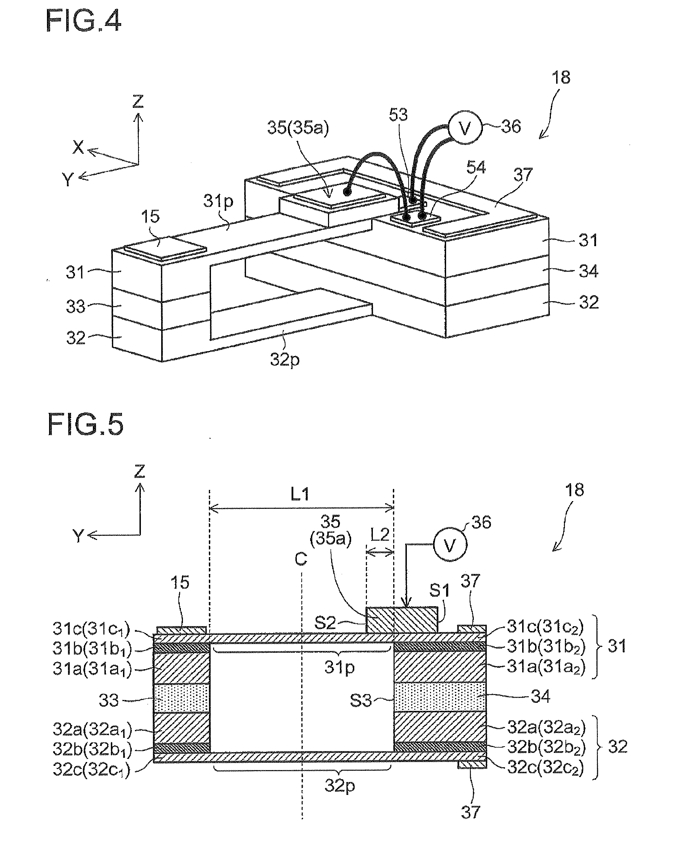

The drive mechanism 18 discussed above will now be described in detail. Fig. 4 is a perspective view showing a schematic diagram of the drive mechanism 18; Fig. 5 is a cross-sectional view of the drive mechanism 18. The drive mechanism 18 is formed with a parallel plate spring that includes, in addition to the moving mirror 15 described above, two plate spring portions 31 and 32, two rigid members 33 and 34, a drive portion 35, a voltage application portion 36 and a holding portion 37. In Fig. 5 and cross-sectional views subsequent to Fig. 5, for convenience, an extraction electrode 53 and a fixed electrode 54 to be described later will not be shown.

As shown in Fig. 4, in the drive mechanism 18, the widths on the side of the rigid member 33 and the side of the rigid member 34 in an X direction are different; this is because the formation regions of the extraction electrode 53 and the fixed electrode 54, and the formation region of the holding portion 37 are acquired. This configuration does not affect the parallel movement of the moving mirror 15 at all.

The plate spring portions 31 and 32 are plate springs that are arranged opposite (parallel to) each other through the rigid members 33 and 34. The plate spring portions 31 and 32 are formed with, for example, an SOI (silicon on insulator) substrate. The SOI substrate for forming the plate spring portion 31 is formed by stacking, in layers, a support layer 31a made of silicon, an insulating oxide film layer (BOX layer) 31b made of oxide silicon and an active layer 31c made of silicon. Likewise, the SOI substrate for forming the plate spring portion 32 is formed by stacking, in layers, a support layer 32a made of silicon, an insulating oxide film layer (BOX layer) 32b and an active layer 32c made of silicon. The plate spring portions 31 and 32 are arranged opposite each other such that the support layers 31a and 32a are placed on the inner side and the active layers 31c and 32c are placed on the outer side, that is, the support layers 31a and 32a are closer to the rigid members 33 and 34 than the active layers 31c and 32c. The direction in which the plate spring portions 31 and 32 are opposite each other is also hereinafter referred to as a Z direction. The Z direction is the same as the direction of the movement of the moving mirror 15.

The support layer 31a, the insulating oxide film layer 31b, the support layer 32a and the insulating oxide film layer 32b are partially removed. Specifically, in the support layer 31a and the insulating oxide film layer 31 b, a region opposite the rigid member 33 and a region opposite the rigid member 34 are left, and the other portions are removed. The region opposite the rigid member 33 and the region opposite the rigid member 34 in the support layer 31a respectively indicate a support layer $31a_1$ directly opposite the rigid member 33 and a support layer $31a_2$ directly opposite the rigid member 34 in the support layer 31a. The region opposite the rigid member 33 and the region opposite the rigid member 34 in the insulating oxide film layer 31b respectively indicate an insulating oxide film layer $31b_1$ opposite the rigid member 33 through the support layer $31a_1$ and an insulating oxide film layer $31b_2$ opposite the rigid member 34 through the support layer $31a_2$ in the insulating oxide film layer 31b.

Likewise, in the support layer 32a and the insulating oxide film layer 32b, a region opposite the rigid member 33 and a region opposite the rigid member 34 are left, and the other portions are removed. The region opposite the rigid member 33 and the region opposite the rigid member 34 in the support layer 32a respectively indicate a support layer $32a_1$ directly opposite the rigid member 33 and a support layer $32a_2$ directly opposite the rigid member 34 in the support layer 32a. The region opposite the rigid member 33 and the region opposite the rigid member 34 in the insulating oxide film layer 32b respectively indicate an insulating oxide film layer $32b_1$ opposite the rigid member 33 through the support layer $32a_1$ and an insulating oxide film layer $32b_2$ opposite the rigid member 34 through the support layer $32a_2$ in the insulating oxide film layer 32b.

As described above, the support layers 31a and 32a and the insulating oxide film layers 31b and 32b are partially removed, and consequently, the portions of the active layer 31 c other than the region opposite the rigid member 33 and the region opposite the rigid member 34, and the portions of the active layer 32c other than the region opposite the rigid member 33 and the region opposite the rigid member 34 are directly opposite each other through the space between the rigid member 33 and the rigid member 34. The region opposite the rigid member 33 and the region opposite the rigid member 34 in the active layer 31c respectively indicate an active layer $31c_1$ opposite the rigid member 33 through the support layer $31a_1$ and the insulating oxide film layer $31b_1$ and an active layer $31c_2$ opposite the rigid member 34 through the support layer $31a_2$ and the insulating oxide film layer $31b_2$ in the active layer 31 c. The region opposite the rigid member 33 and the region opposite the rigid member 34 in the active layer 32c respectively indicate an active layer $32c_1$ opposite the rigid member 33 through the support layer $32a_1$ and the insulating oxide film layer $32b_1$ and an active layer $32c_2$ opposite the rigid member 34 through the support layer $32a_2$ and the insulating oxide film layer $32b_2$ in the active layer 32c.

The plate spring portions 31 and 32 each have flat plate portions 31p and 32p. The flat plate portions 31p and 32p are flat plate portions of the plate spring portions 31 and 32 that are opposite each other through the air layer between the rigid member 33 and the rigid member 34. Here, when the support layers 31a and 32a and the insulating oxide film layers 31b and 32b are removed by eliminating, from the SOI substrates, the region (the support layers $31a_1$ and $32a_1$ and the insulating oxide film layers $31b_1$ and $32b_1$) opposite the rigid member 33 and the region (the support layers $31a_2$ and $32a_2$ and the insulating oxide film layers $31b_2$ and $32b_2$) opposite the rigid member 34, the flat plate portions 31p and 32p are respectively formed with the active layer 31c and 32c opposite each other through the space between the rigid member 33 and the rigid member 34.

The regions (the support layers $31a_1$ and $31a_2$) opposite the rigid members 33 and 34 in the support layer 31a of the plate spring portion 31 are respectively coupled to the rigid members 33 and 34. Likewise, the regions (the support layers $32a_1$ and $32a_2$) opposite the rigid members 33 and 34 in the support layer 32a of the plate spring portion 32 are respectively coupled to the rigid members 33 and 34.

The rigid members 33 and 34 are arranged separately between the plate spring portions 31 and 32 in a direction perpendicular to the direction (Z direction) in which the plate spring portions 31 and 32 are opposite each other. The direction in which the rigid members 33 and 34 are arranged separately, that is, the direction in which the rigid members 33 and 34 are aligned through the air layer, is also hereinafter referred to as a Y direction. Here, the X, Y and Z directions described above are perpendicular to each other.

The rigid member 33 is coupled to the plate spring portion 31 (in particular, the support layer $31a_1$), and is also coupled to the plate spring portion 32 (in particular, the support layer $32a_1$). Likewise, the rigid member 34 is coupled to the plate spring portion 31 (in particular, the support layer $31a_2$), and is also coupled to the plate spring portion 32 (in particular, the support layer $32a_2$).

Both the rigid members 33 and 34 are formed with a glass that is thicker than each of the flat plate portions 31p and 32p of the plate spring portions 31 and 32. In the present embodiment, as the glass described above, for example, alkali glass containing sodium oxide ($Na_2O$) or potassium oxide ($K_2O$) is used.

In the present embodiment, the rigid members 33 and 34 are formed of glass, the support layers $31a_1$ and $31a_2$ of the plate spring portion 31 and the support layers $32a_1$ and $32a_2$ of the plate spring portion 32 are formed of silicon, and thus the rigid members 33 and 34 and the plate spring portions 31 and 32 are coupled to each other by, for example, anodic bonding. The anodic bonding is a method of applying a direct-current voltage of a few hundred volts to silicon and glass under a temperature of a few hundred °C, producing a covalent bond of Si-O and thereby directly bonding them.

The holding portion 37 is a portion that is held by a fixing member or the like when the drive mechanism 18 is fixed to the interferometer 1, and is provide on the edge of each of the external surfaces (the surfaces on the opposite side to the side of the rigid members 33 and 34) of the plate spring portions 31 and 32 located above and below the rigid member 34 such that the drive mechanism 18 is held by pinching the top and bottom of the drive mechanism 18.

The drive portion 35 curves and deforms one of the plate spring portions 31 and 32, and thereby moves the rigid member 33 and the moving mirror 15 parallel to the (Z direction) with respect to the rigid member 34. In the present embodiment, the drive portion 35 is provided on the surface of the plate spring portion 31, and the position where it is arranged will be described in detail later. On the other hand, the moving mirror 15 described above is provided above the rigid member 33 and on the surface of the plate spring portion 31 on the opposite side to the rigid member 33. The drive portion 35 and the moving mirror 15 may be provided on the plate spring portion 32.

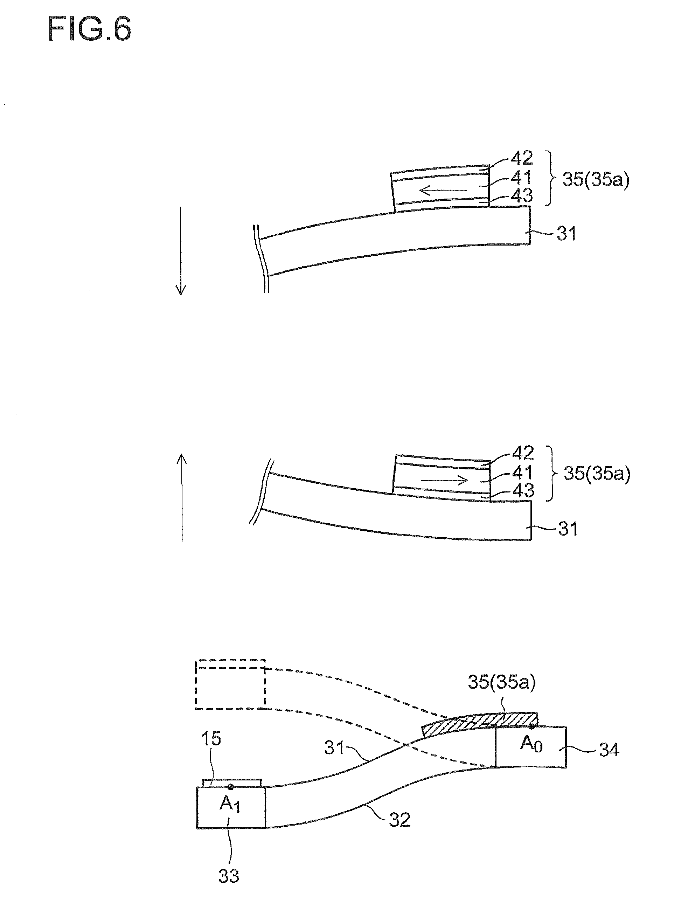

Here, the drive portion 35 is formed with a piezoelectric element (PZT element) 35a that expands and contracts according to a voltage applied from the voltage application portion 36, which will be described later. As shown in Fig. 6, the piezoelectric element 35a has a structure in which a PZT (lead zirconate titanate) 41 that is a piezoelectric material is sandwiched between electrodes 42 and 43. A positive or negative voltage is applied to the electrodes 42 and 43 to make the PZT 41 expand and contract in a horizontal direction, and thus it is possible to curve and deform the plate spring portion 31 and to displace the moving mirror 15 together with the rigid member 33. For example, when a voltage is applied to the electrodes 42 and 43 to make the PZT 41 expand in the horizontal direction, the plate spring portion 31 is deformed to become upwardly convex, and thus the moving mirror 15 undergoes a downward displacement together with the rigid member 33. On the other hand, when a voltage of polarity opposite to the above voltage is applied to the electrodes 42 and 43 to make the PZT 41 contract in the horizontal direction, the plate spring portion 31 is deformed to become downwardly convex, and thus the moving mirror 15 undergoes an upward displacement together with the rigid member 33.

As described above, a positive or negative voltage is applied to the electrodes 42 and 43 to make the PZT 41 expand and contract in the horizontal direction, and thus it is possible to curve and deform the plate spring portion 31, with the result that it is possible to displace the rigid member 33 and the moving mirror 15 with respect to the rigid member 34.

The voltage application portion 36 shown in Fig. 4 applies a voltage to the piezoelectric element 35a. The application of the voltage to the piezoelectric element 35a as described above can be realized with the following configuration. On the same surface of the plate spring portion 31 as the one on which the piezoelectric element 35a is provided, the extraction electrode 53 and the fixed electrode 54 are formed. Before the formation of the piezoelectric element 35a, a metal film serving as the extraction electrode 53 is evaporated on the plate spring portion 31, and the electrode 43 on the lower surface of the piezoelectric element 35a is brought into contact with the metal film, and thus it is possible to extract the electrode 43 on the lower surface. The extraction electrode 53 is wire-bonded to the voltage application portion 36.

The fixed electrode 54 is wire-bonded to the electrode 42 on the upper surface of the piezoelectric element 35a, and is also wire-bonded to the voltage application portion 36. In this configuration, the voltage application portion 36 can apply a voltage to the piezoelectric element 35a through the extraction electrode 53 and the fixed electrode 54. On the surface of the plate spring portion 31, the extraction electrode 53 and the fixed electrode 54 may be formed in any position above the rigid member 34 where the wire-bonding is easily performed.

(2-2. Resonance primary mode)

Incidentally, in the parallel plate spring, even when a voltage is applied to the piezoelectric element, a moving member (for example, corresponding to the rigid member 33 or the moving mirror 15) may be moved not parallel but while being tilted. This is probably because the expansion and contraction of the piezoelectric element cause only one plate spring portion to expand and contract (deform), and thus the two plate spring portions differ in length.

Hence, in the present embodiment, focus is placed on the parallel movement of the moving member in the resonance primary mode of the parallel plate spring, and the voltage application portion 36 applies a voltage to the piezoelectric element 35a at the same frequency $f (= f_0)$ as the primary resonance frequency $f_0$ that is determined by a system including part of the plate spring portions 31 and 32 and the rigid member 33. The resonance primary mode refers to an oscillation mode in which, as shown in Fig. 6, for example, in the plate spring portion 31, point $A_0$ that does not undergo any displacement at all in the Z direction even when the piezoelectric element 35a expands and contracts is assumed to be a node, and in which the first loop (point $A_1$) undergoes, from there, the maximum displacement in the position of a free end. Here, the resonance frequency $f_0$ (Hz) is expressed as follows.

$$f_0 = (1 / 2\pi) \cdot \sqrt{(k / m)},$$

where k is the spring constant of a spring portion, and
m is the mass (g) of a parallel movement portion.

The "spring portion" described above refers to a portion of the plate spring portions 31 and 32 that practically functions as a spring by the deformation; specifically it refers to the flat plate portion 31p of the plate spring portion 31 and the flat plate portion 32p of the plate spring portion 32. The "parallel movement portion" described above refers to a portion that undergoes a parallel movement by the deformation of the spring portion; specifically, it refers to the support layer $31a_1$, the insulating oxide film layer $31b_1$ and the active layer $31c_1$ of the plate spring portion 31, the support layer $32a_1$, the insulating oxide film layer $32b_1$ and the active layer $32c_1$ of the plate spring portion 32 and the rigid member 33. In "m" described above, consideration is not given to the mass of the moving mirror 15. This is because it is considered that the moving mirror 15 is a thin film and its mass can be almost ignored.

As described above, the voltage application portion 36 applies a voltage to the piezoelectric element 35a at the same frequency $f$ as the resonance frequency $f_0$ when the plate spring portions 31 and 32 and the rigid member 33 together resonate, and thus it is possible to prevent the rigid member 33 and the moving mirror 15 from being moved while being tilted. Moreover, the resonance causes the rigid member 33 and the moving mirror 15 to be displaced, and thus it is possible to reliably increase the amount of displacement thereof as compared with a case where a voltage is applied to the piezoelectric element 35a at another frequency to displace the rigid member 33 and the moving mirror 15.

(2-3. Position where the drive portion is arranged)

The position where the drive portion 35 (the piezoelectric element 35a) is arranged will now be described in detail. As shown in Figs. 4 and 5, the piezoelectric element 35a is provided on the surface of the plate spring portion 31 on the opposite side to the plate spring portion 32. Moreover, the piezoelectric element 35a is provided toward the side of the rigid member 34 with respect to the center C of the flat plate portion 31p of the plate spring portion 31 in the direction (Y direction) in which the rigid members 33 and 34 are aligned. With the arrangement of the piezoelectric element 35a described above, it is possible to obtain the following effects.

Firstly, since the piezoelectric element 35a has the structure in which, as described above, the PZT 41 is sandwiched between the thin electrodes 42 and 43, the size and thickness of the piezoelectric element 35a are significantly reduced as compared with an electromagnetic drive source, such as a VCM (voice coil motor), using a magnet and a coil. When an electromagnetic drive source is used, it is necessary to acquire a position (large space) where it is installed, and thus the size of the drive mechanism itself is increased; on the other hand, when the small and thin piezoelectric element 35a is used as the drive source, as in the present invention, the piezoelectric element 35a is preferably formed directly on a portion (the surface of the plate spring portion 31) that is desired to be curved and deformed, and it is not necessary to acquire a large installation space. Hence, the drive portion 35 is formed with the piezoelectric element 35a, and is provided on the surface of the plate spring portion 31, and thus it is possible to reliably realize a small drive mechanism 18. Consequently, it is possible to reliably reduce the size of the interferometer 1 to which the drive mechanism 18 is applied and the size of the spectroscopic analysis device.

Since the piezoelectric element 35a is provided not on the entire surface of the flat plate portion 31p of the plate spring portion 31 but on part of the surface, it is possible to reduce the possibility that the piezoelectric element 35a serves as a load when the plate spring portion 31 is curved and deformed, and to drive the piezoelectric element 35a even at a low drive voltage. Moreover, since the piezoelectric element 35a is provided toward the side of the rigid member 34 with respect to the center C of the flat plate portion 31p, even when the piezoelectric element 35a is driven at the low drive voltage, as shown in Fig. 6, it is possible to reliably resonate the plate spring portion 31, with the result that it is possible to greatly displace the rigid member 33 and the moving mirror 15. Hence, in the above-described spectroscopic analysis device to which the drive mechanism 18 is applied, it is possible to reliably realize a high resolution.

As shown in Fig. 5, it is assumed that the surface of the piezoelectric element 35a on the side of the rigid member 34 is a surface S1 and that the surface on the side of the rigid member 33 is a surface S2. It is also assumed that the surface of the rigid member 34 on the side of the rigid member 33 is a surface S3. In the present embodiment, in the Y direction, the surface S1 is located on the opposite side to the rigid member 33 with respect to the surface S3, and the surface S2 is located on the side of the rigid member 34 with respect to the center C of the flat plate portion 3 1 p and on the side of the rigid member 33 as compared with the surface S3.

Since, as described above, the piezoelectric element 35a is provided on the surface of the plate spring portion 31 such that the piezoelectric element 35a straddles the surface S3, that is, part of the piezoelectric element 35a is located above the rigid member 34, when the extraction electrode 53 and the fixed electrode 54 are formed on the surface of the plate spring portion 31 above the rigid member 34 as described above, it is possible to prevent the plate spring portion 31 from being damaged when the extraction electrode 53, the fixed electrode 54 and other portions (for example, the electrode 42 on the upper surface of the piezoelectric element 35a, the voltage application portion 36) are connected by wire bonding. In other words, since the bonding operation here is performed above the rigid member 34, no stress from outside is applied to the flat plate portion 31p, and it is possible to prevent the plate spring portion 31 from being damaged by the application of the stress. Moreover, since the wires that have been subjected to the bonding are located not above the flat plate portion 31p but above the rigid member 34, even after the bonding, the wires are prevented from pressing the flat plate portion 31p to hamper the deformation (resonance) of the plate spring portion 31, and thus it is possible to prevent the deformation of the plate spring portion 31 from being adversely affected.

Here, when in the Y direction, the length of the flat plate portion 31p of the plate spring portion 31 is assumed to be L1 (mm), and the length of the piezoelectric element 35a on the side of the rigid member 33 from a surface including the surface S3 is assumed to be L2 (mm), the following formula is preferably satisfied.

$$L2 / L1 \leq 0.3$$

The reason for this is as follows.

In the configuration where the piezoelectric element 35a is provided on one of the plate spring portions 31 and 32 (here, the plate spring portion 31), when the length of the piezoelectric element 35a on the flat plate portion 31p is made longer, the balance between the plate spring portions 31 and 32 at the time of the deformation is disturbed, the rigid member 33 and the moving mirror 15 are moved while being tilted and the tilt is increased. In other words, the piezoelectric element 35a on the flat plate portion 31p is preferably as short as possible because the tilt of the rigid member 33 and the moving mirror 15 when they are moved is decreased.

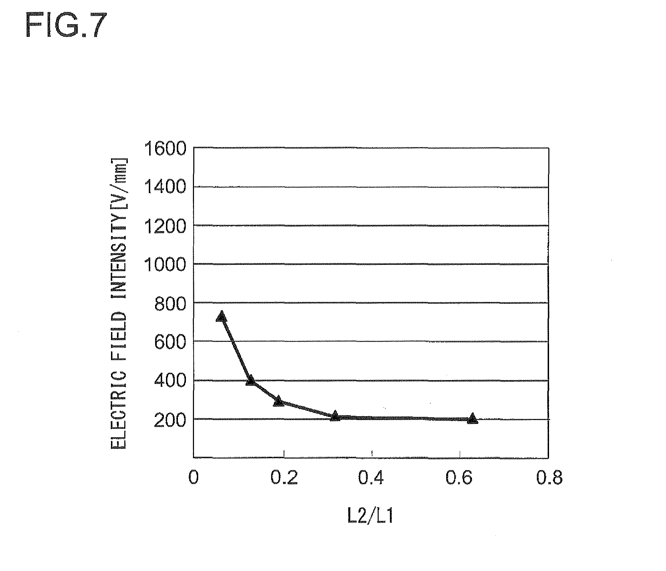

Fig. 7 is a graph showing a relationship between L2 /L1 and an application voltage (electric field intensity) to the piezoelectric element 35a when the amount of displacement of the moving mirror 15 is assumed to be constant. The electric field intensity on the vertical axis of Fig. 7 is standardized by the length of the piezoelectric element 35a. In the figure, when L2 / L1 > 0.3, the application voltage itself can be reduced; since the amount of change of the application voltage is low with respect to the amount of change of L2 / L1, the effect of significantly reducing the application voltage is small.

Hence, since L2 / L1 $\leq$ 0.3 is satisfied, and thus L2 is sufficiently low with respect to L1, it is possible to effectively drive the piezoelectric element 35a while sufficiently obtaining the effect of reducing the tilt of the rigid member 33 and the moving mirror 15 when they are moved.

The above conditional formula can be obtained regardless of the constitutional materials of the plate spring portions 31 and 32 and the rigid member 33 and the thickness of the flat plate portions 31p and 32p. The reason for this is as follows.

When L2 is low with respect to L1, the largest stress is applied to the end portion of the piezoelectric element 35a on the side of the rigid member 33, and thus a force is applied in a direction in which the end portion is moved away from the plate spring portion 31. Hence, in order to obtain a desired displacement of the rigid member 33 and the moving mirror 15, it is necessary to apply a high voltage to the piezoelectric element 35a (see Fig. 7). On the other hand, when L2 is high with respect to L1, the piezoelectric element 35a is warped at the time of the application of a voltage to the piezoelectric element 35a, and thus the largest stress is applied to the end portion of the piezoelectric element 35a on the side of the rigid member 34. This kind of tendency is the same as long as the amount of displacement of the rigid member 33 and the moving mirror 15 is constant even if the constitutional materials of the plate spring portions 31 and 32 and the rigid member 33 are changed or the thickness of each of the flat plate portions 31p and 32p is changed. Hence, it is said that, even if depending on the constitutional materials of the plate spring portions 31 and 32 and the rigid member 33 and the thickness of each of the flat plate portions 31p and 32p, a value (absolute value) of the application voltage to the piezoelectric element 35a for obtaining a desired amount of displacement of the rigid member 33 and the moving mirror 15 is varied, a ratio of L2 / L1 is preferably 0.3 or less regardless of the constitutional materials of the plate spring portions 31 and 32 and the rigid member 33 and the thickness of each of the flat plate portions 31p and 32p.

(2-4. Configuration in which two piezoelectric elements are provided)

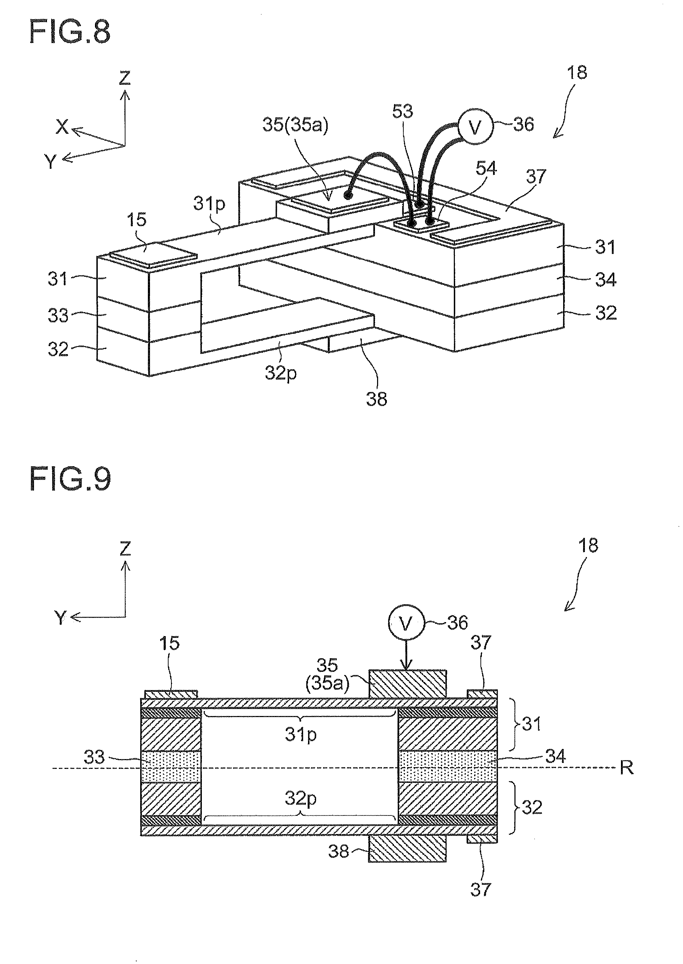

Fig. 8 is a perspective view showing another configuration of the drive mechanism 18; Fig. 9 is a cross-sectional view of the drive mechanism 18 of Fig. 8. This drive mechanism 18 differs from the drive mechanism 18 of Figs. 4 and 5 in that it includes a piezoelectric element 38 different from the piezoelectric element 35a. This piezoelectric element 38 is provided on the surface of the plate spring portion 32 on the opposite side to the plate spring portion 31 and is provided in such a position that the piezoelectric element 38 is symmetrical with the piezoelectric element 35a with respect to a surface R perpendicular to the direction (Z direction) in which the plate spring portions 31 and 32 are opposite each other.

The piezoelectric element 38 is provided as described above, and thus it is possible to satisfactorily maintain the balance between the upper and lower of the drive mechanism 18 forming the parallel plate spring, that is, to deform the plate spring portions 31 and 32 in a well-balanced state, with the result that it is possible to enhance the parallelism when the rigid member 33 and the moving mirror 15 undergo parallel movement. In other words, the rigid member 33 and the moving mirror 15 can be moved (displaced) in a state as close to parallelism as possible. Since the piezoelectric element 38 is only provided as described above and wiring for applying a voltage to the piezoelectric element 38 is not necessary, it is possible to easily enhance, with a simple configuration, the parallelism at the time of the parallel movement.

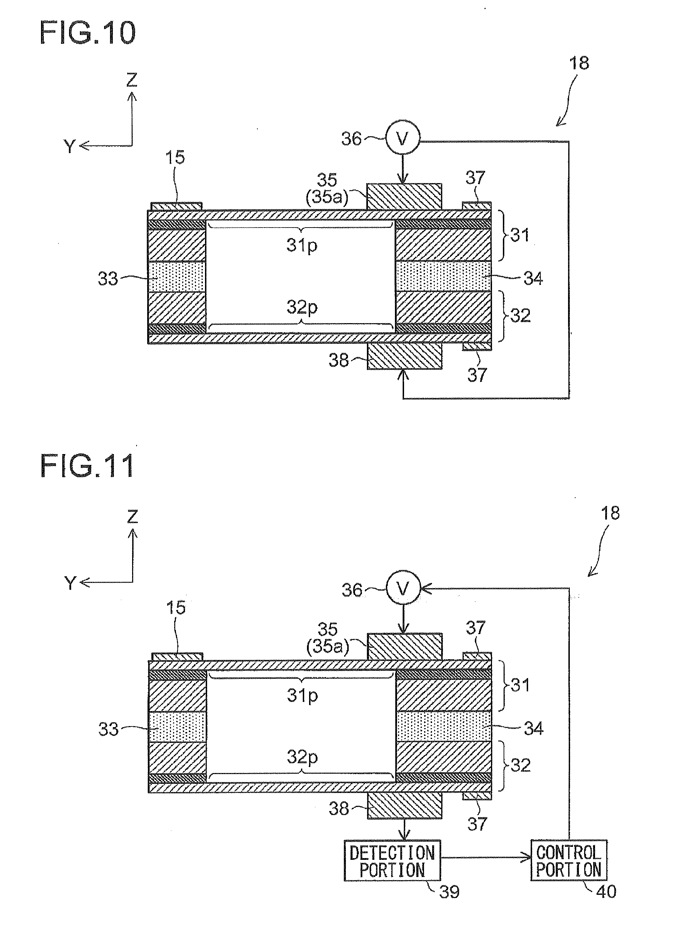

Fig. 10 is a cross-sectional view showing yet another configuration of the drive mechanism 18. This drive mechanism 18 has a configuration in which, in the configuration where the two piezoelectric elements 35a and 38 are provided as shown in Figs. 8 and 9, a voltage is applied by the voltage application portion 36 to each of the piezoelectric elements 35a and 38. In other words, on the side of the plate spring portion 32, the electrodes (not shown) corresponding to the extraction electrode 53 and the fixed electrode 54 provided on the side of the plate spring portion 31 are also provided, and these electrodes are electrically connected by wire bonding to the upper and lower electrodes of the piezoelectric element 38 and the voltage application portion 36. In this configuration, the voltage application portion 36 preferably applies a voltage to the piezoelectric elements 35a and 38 such that the deformation of the plate spring portion 31 caused by the expansion and extraction of the piezoelectric element 35a is the same as the deformation of the plate spring portion 32 caused by the expansion and extraction of the piezoelectric element 38.

Specifically, in Fig. 10, in order for the rigid member 33 and the moving mirror 15 to be moved upward (in the Z direction) by the deformation of the plate spring portions 31 and 32, it is necessary to apply, to each of the piezoelectric elements 35a and 38, such a voltage that, whereas the piezoelectric element 35a contracts in the horizontal direction, the piezoelectric element 38 expands in the horizontal direction. On the contrary, in order for the rigid member 33 and the moving mirror 15 to be moved downward by the deformation of the plate spring portions 31 and 32, it is necessary to apply, to each of the piezoelectric elements 35a and 38, such a voltage that, whereas the piezoelectric element 35a expands in the horizontal direction, the piezoelectric element 38 contracts in the horizontal direction.

Hence, in Fig. 10, when the directions of the polarization of the PZTs of the piezoelectric elements 35a and 38 are, for example, opposite to each other (one direction is upward and the other direction is downward), the voltage application portion 36 preferably applies a voltage to each of the piezoelectric elements 35a and 38 such that a voltage of the same polarity is applied at the same frequency to the electrodes located on the same side with respect to the PZTs among the two electrodes sandwiching each of the PZTs of the piezoelectric elements 35a and 38. For example, the voltage application portion 36 preferably applies a voltage to each of the piezoelectric elements 35a and 38 such that a voltage of the same polarity is applied to the electrode 42 (the electrode on the opposite side to the rigid member 34 with respect to the PZT 41) on the upper side of the piezoelectric element 35a and the electrode (the electrode on the side of the rigid member 34 with respect to the PZT) on the upper side of the piezoelectric element 38.

When the directions of the polarization of the PZTs of the piezoelectric elements 35a and 38 are, for example, the same as each other (for example, both are upward), the voltage application portion 36 preferably applies a voltage to each of the piezoelectric elements 35a and 38 such that a voltage of the opposite polarity is applied at the same frequency to the electrodes located on the same side with respect to the PZTs among the two electrodes sandwiching each of the PZTs of the piezoelectric elements 35a and 38. For example, the voltage application portion 36 preferably applies a voltage to each of the piezoelectric elements 35a and 38 such that, when a positive voltage is applied to the electrode 42 on the upper side of the piezoelectric element 35a, a negative voltage is applied to the electrode (the electrode on the side of the rigid member 34 with respect to the PZT) on the upper side of the piezoelectric element 38.

As described above, the voltage application portion 36 applies a voltage to each of the piezoelectric elements 35a and 38, and thus it is possible to similarly deform (resonate) the plate spring portions 31 and 32, with the result that the deformation of one side is prevented from hampering the deformation of the other and resonance easily occurs. Thus, it is possible to reliably enhance the parallelism when the rigid member 33 and the moving mirror 15 undergo parallel movement.

(2-5. Configuration that can cope with variations in resonance frequency) Incidentally, when a voltage is applied to a piezoelectric element, the piezoelectric element expands and contracts whereas, when a force is applied to deform the piezoelectric element, a voltage corresponding to the deformation is output. When the displacement of the rigid member 33 and the moving mirror 15 becomes the largest at the time of resonance, the piezoelectric element is also significantly distorted, and thus a voltage (for example, the absolute value) output from the piezoelectric element becomes the largest. Hence, by utilization of this phenomenon, the voltage (in particular, the maximum voltage) output from the piezoelectric element is monitored, and thus it is possible to detect whether or not the rigid member 33 and the moving mirror 15 are displaced by the resonance and to cope with variations in resonance frequency. Variations in resonance frequency can be produced by the following: for example, an environmental temperature is changed by the generation of heat by the reference light source 21, and thus the shape of the spring portion described above is changed by the thermal expansion and contraction and the spring constant is changed. A specific configuration that can cope with variations in resonance frequency will be described below.

Fig. 11 is a cross-sectional view showing yet another configuration of the drive mechanism 18. In this drive mechanism 18, in addition to the configuration where the two piezoelectric elements 35a and 38 are provided as shown in Figs. 8 and 9, a detection portion 39 and a control portion 40 are provided. Needless to say, since this configuration is based on the configuration of Figs. 8 and 9, the voltage application portion 36 applies a voltage only to one piezoelectric element, that is, the piezoelectric element 35a and not to the other, that is, the piezoelectric element 38.

The detection portion 39 is a sensor that detects the maximum displacement of the rigid member 33 and the moving mirror 15 from a voltage that is output from the piezoelectric element 38 at the time of deformation of the plate spring portion 32 and that corresponds to the distortion of the piezoelectric element 38. As the voltage (for example, the absolute value) output from the piezoelectric element 38 is higher, the rigid member 33 and the moving mirror 15 are more significantly displaced. Hence, the detection portion 39 detects the maximum voltage (for example, the absolute value) output from the piezoelectric element 38, and thereby can detect the maximum displacement of the rigid member 33 and the moving mirror 15. The detection portion 39 can also detect the amount of displacement of and the direction of displacement (position where the displacement occurs) of the rigid member 33 and the moving mirror 15 based on the magnitude and direction (positive or negative sign) of the voltage output from the piezoelectric element 38.

The control portion 40 controls the application of a voltage to the piezoelectric element 35a by the voltage application portion 36. Specifically, the control portion 40 controls the voltage application portion 36 such that the frequency of the voltage applied to the piezoelectric element 35a is changed according to variations in the maximum displacement of the rigid member 33 and the moving mirror 15 detected by the detection portion 39. The control portion 40 performing such control is configured to include a CPU (central processing unit).

The voltage application portion 36 described above is configured to include a VCO (voltage controlled oscillator) circuit. The VCO circuit is a circuit that changes the frequency of an output voltage according to an input voltage. Hence, the voltage application portion 36 can change the frequency of an output voltage (the application voltage to the piezoelectric element 35a) under control by the control portion 40.

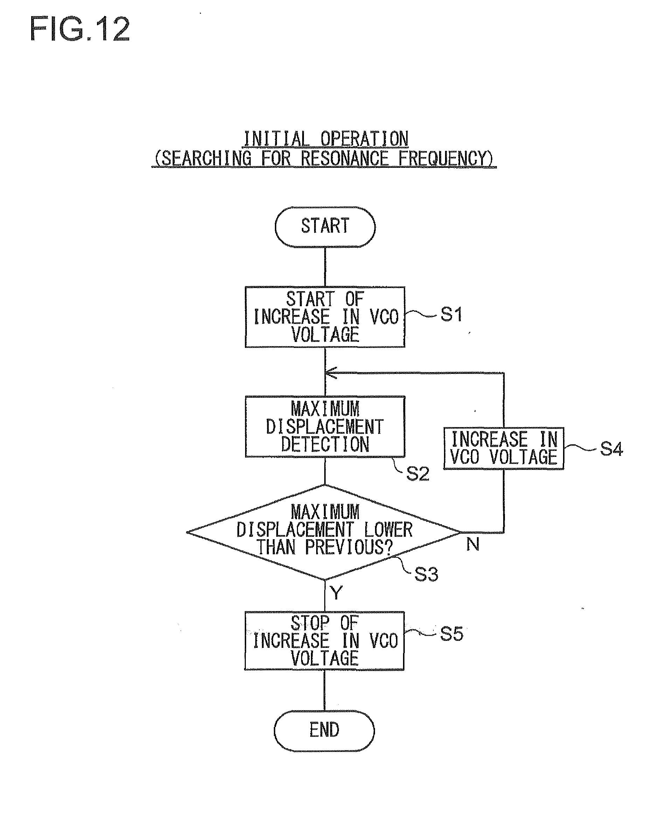

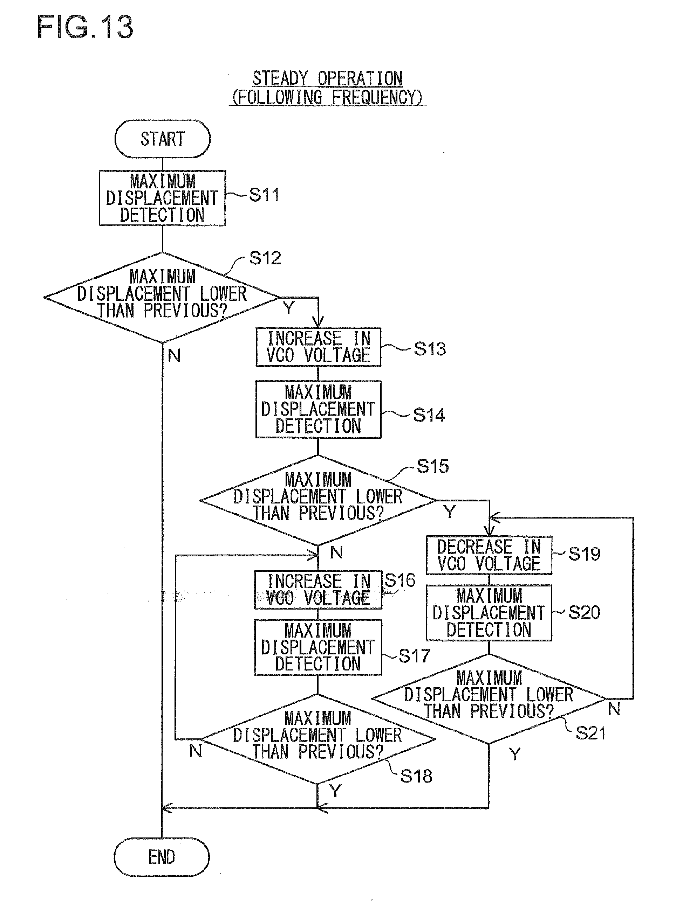

The flow of operations through voltage control by the control portion 40 will now be described based on Figs. 12 and 13. Figs. 12 and 13 are flowcharts showing the operations through voltage control by the control portion 40; Fig. 12 is the flowchart of an initial operation of searching for a resonance frequency; Fig. 13 is the flowchart of a steady operation of making an oscillation frequency follow variations in resonance frequency.

In the initial operation, the control portion 40 first starts to increase the input voltage of the VCO circuit of the voltage application portion 36, and increases the frequency of the output voltage (S1). Then, the detection portion 39 detects the maximum value (for example, the absolute value) of the voltage output from the piezoelectric element 38 to detect the maximum displacement of the rigid member 33 and the moving mirror 15 (S2).

Then, the control portion 40 compares the maximum displacement detected in S2 with the maximum displacement detected before such detection (S3). Here, since the maximum displacement of the rigid member 33 and the moving mirror 15 when the operation is started is zero, the maximum displacement detected in S2 is absolutely higher than the maximum displacement detected before such detection (no in S3). Hence, the control portion 40 further increases the input voltage of the VCO circuit and further increases the frequency of the output voltage (S4).

Thereafter, the steps in S2 to S4 are repeated; when the maximum displacement detected in S2 becomes lower than the maximum displacement detected before such detection (yes in S3), the control portion 40 determines that the rigid member 33 and the moving mirror 15 reach the maximum displacement and stops the increase in the input voltage of the VCO circuit (S5). Since, when the rigid member 33 and the moving mirror 15 reach the maximum displacement, the rigid member 33 and the moving mirror 15 can be determined to oscillate by resonance, the frequency of the output voltage of the VCO circuit at this time can be regarded as the resonance frequency. In other words, with the initial operation described above, it is possible to determine the resonance frequency without depending on the theoretical calculation described above.

In the steady operation, the detection portion 39 detects the maximum value (for example, the absolute value) of the voltage output from the piezoelectric element 38 to detect the maximum displacement of the rigid member 33 and the moving mirror 15 (S11). The control portion 40 compares the maximum displacement detected in S11 with the maximum displacement (for example, the maximum displacement detected immediately before the stop of the increase in the input voltage of the VCO circuit in S5 of Fig. 12) detected before such detection (S12). Here, if the resonance frequency does not vary, the maximum displacement detected in S11 is equal to the previous maximum displacement (no in S12); in this case, the present flow is completed. If there are a plurality of resonance frequencies, the maximum displacements of the rigid member 33 and the moving mirror 15 are memorized, and the frequency for the maximum displacement is assumed to be the resonance frequency.

On the other hand, since, when the resonance frequency varies, the maximum displacement detected in S11 is lower than the previous maximum displacement (yes in S12), in this case, the control portion 40 increases the input voltage of the VCO circuit and increases the frequency of the output voltage (S13). Then, the detection portion 39 detects the maximum value of the voltage output from the piezoelectric element 38 to detect the maximum displacement of the rigid member 33 and the moving mirror 15 (S14).

Then, the control portion 40 compares the maximum displacement detected in S14 with the maximum displacement (for example, the maximum displacement detected in S11) detected before such detection (S15). If the maximum displacement detected in S14 is higher than the maximum displacement detected before such detection (no in S15), since it is understood that the maximum displacement is increased so as to increase the frequency, the control portion 40 further increases the input voltage of the VCO circuit to increase the frequency of the output voltage (S16). Then, the detection portion 39 detects the maximum value of the voltage output from the piezoelectric element 38 to detect the maximum displacement of the rigid member 33 and the moving mirror 15 (S17). Then, the control portion 40 compares the maximum displacement detected in S17 with the maximum displacement (for example, the maximum displacement detected in S14) detected before such detection (S18).

If the maximum displacement detected in S17 is higher than the maximum displacement detected before such detection (no in S 18), since there is probably room for increasing the maximum displacement, the steps in S16 to S18 are repeated. Then, when the maximum displacement detected in S17 becomes lower than the maximum displacement detected before such detection (yes in S18), the control portion 40 determines that the rigid member 33 and the moving mirror 15 reach the maximum displacement and that the frequency of the application voltage to the piezoelectric element 35a agrees with the resonance frequency, and completes the present flow.

If, in S15, the maximum displacement detected in S 14 is lower than the maximum displacement detected before such detection (yes in S15), since it is understood that the maximum displacement is increased so as to decrease the frequency, the control portion 40 decreases the input voltage of the VCO circuit to decrease the frequency of the output voltage (S19). Then, the detection portion 39 detects the maximum value of the voltage output from the piezoelectric element 38 to detect the maximum displacement of the rigid member 33 and the moving mirror 15 (S20). Then, the control portion 40 compares the maximum displacement detected in S20 with then maximum displacement (for example, the maximum displacement detected in S14) detected before such detection (S21).

If the maximum displacement detected in S20 is higher than the maximum displacement detected before such detection (no in S21), since there is probably room for increasing the maximum displacement, the steps in S19 to S21 are repeated. Then, when the maximum displacement detected in S20 becomes lower than the maximum displacement detected before such detection (yes in S21), the control portion 40 determines that the rigid member 33 and the moving mirror 15 reach the maximum displacement and that the frequency of the application voltage to the piezoelectric element 35a agrees with the resonance frequency, and completes the present flow.

As described above, the control portion 40 controls the voltage application portion 36 according to variations in the maximum displacement of the rigid member 33 and the moving mirror 15 detected by the detection portion 39 such that the frequency (the frequency of the application voltage to the piezoelectric element 35a) of the output voltage of the VCO circuit varies. Hence, even if variations in the environmental temperature or the like during the operation of the drive mechanism 18 causes the resonance frequency to vary, it is possible to make the frequency of the output voltage of the VCO circuit follow the varying frequency.

In particular, the control portion 40 controls the voltage application portion 36 (the VCO circuit) based on the voltage detected by the detection portion 39 such that the frequency of the application voltage to the piezoelectric element 35a agrees with the resonance frequency. Hence, even if the drive mechanism 18 of the present invention is used under an environment in which the resonance frequency varies or the resonance frequency is likely to vary, it is possible to constantly maintain the stable resonance state.

Although in the above description, based on the voltage detected by the detection portion 39, the displacement of the rigid member 33 and the moving mirror 15 is monitored, and the voltage application portion 36 is controlled based on such a displacement, it is also possible to detect an oscillation frequency from the number of times of the inversion, within a predetermined time period, of a positive or negative sign of the voltage detected by the detection portion 39, and thereby control, based on such an oscillation frequency, the voltage application portion 36 (to make the frequency of the application voltage to the piezoelectric element 35a follow the varying resonance frequency).

(2-6. Another configuration of the drive mechanism)

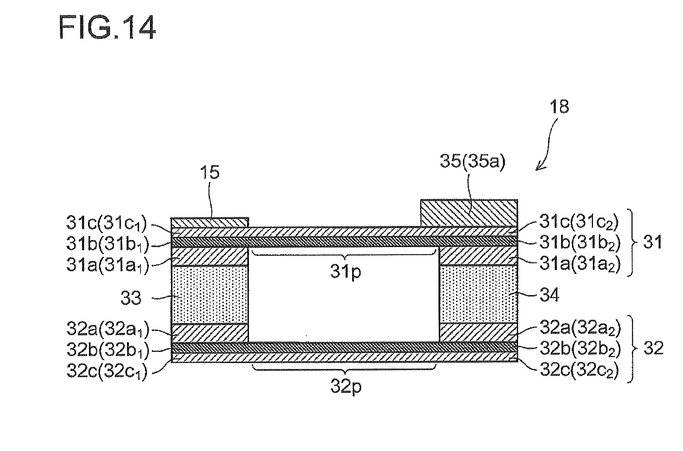

Fig. 14 is a cross-sectional view showing yet another configuration of the drive mechanism 18. As shown in the figure, the flat plate portion 31p of the plate spring portion 31 of the drive mechanism 18 may be formed with two layers that are the insulating oxide film layer 31b and the active layer 31c, and the flat plate portion 32p of the plate spring portion 32 may be formed with two layers that are the insulating oxide film layer 32b and the active layer 32c.

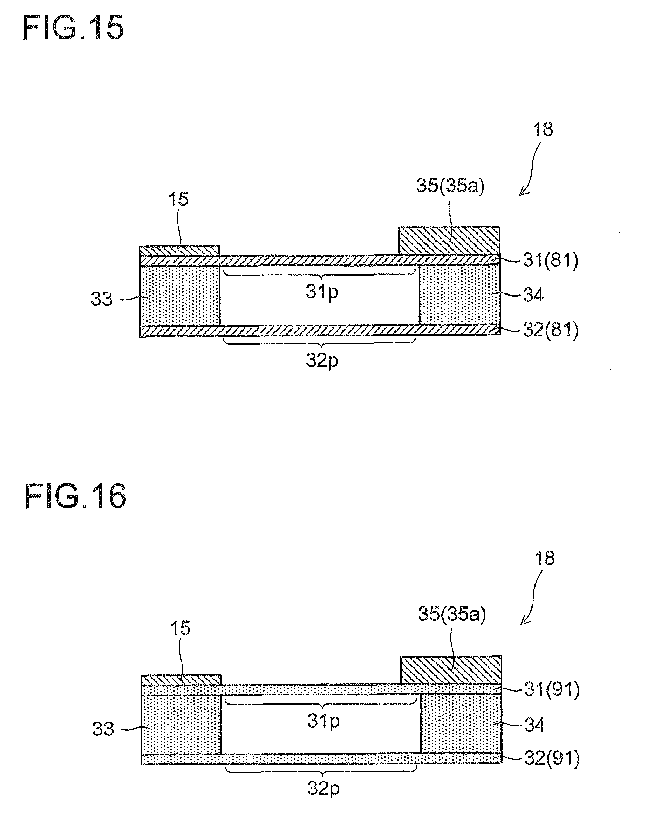

Fig. 15 is a cross-sectional view showing yet another configuration of the drive mechanism 18. As shown in the figure, the plate spring portions 31 and 32 of the drive mechanism 18 may be formed with flat plate-shaped silicon substrates 81, respectively. Anodic bonding can be used to couple the plate spring portions 31 and 32 (silicon substrates 81) to the rigid members 33 and 34 made of glass. In this configuration, it is possible to easily realize the drive mechanism 18 with a simple configuration where the rigid members 33 and 34 are sandwiched between the flat plate-shaped silicon substrates 81. Moreover, as compared with the case where the SOI substrate 61 is used, it is possible to significantly simplify the step of producing the plate spring portions 31 and 32.

Fig. 16 is a cross-sectional view showing yet another configuration of the drive mechanism 18. As shown in the figure, the plate spring portions 31 and 32 of the drive mechanism 18 may be formed with flat plate-shaped glass substrates 91, respectively. In this case, laser processing or dicing processing is performed on a glass (for example, alkali glass) having, for example, a thickness of 100 $\mu$m or less, and thus, it is possible to obtain the glass substrates 91. Optical contact or diffusion bonding can be used to couple the plate spring portions 31 and 32 (glass substrates 91) to the rigid members 33 and 34 made of glass. The optical contact is a method of bring smooth surfaces into intimate contact with each other and of coupling two members by the attraction of molecules. The diffusion bonding is a method of heating, pressuring and holding a base material without being melted and of obtaining a joint portion by diffusing the atoms of a joint interface across a joint surface.

As described above, the plate spring portions 31 and 32 are formed with the glass substrates 91, respectively, and thus it is possible to easily realize the drive mechanism 18 with a simple configuration where the rigid members 33 and 34 are sandwiched between the flat plate-shaped silicon substrates 91. Moreover, as compared with the case where the SOI substrate 61 is used, it is possible to significantly simplify the step of producing the plate spring portions 31 and 32. Furthermore, since both the rigid members 33 and 34 and the plate spring portions 31 and 32 are formed of glass, it is possible to reliably prevent the drive mechanism 18 from being deformed by temperature variation and to reliably prevent the moving portions (the rigid member 33 and the moving mirror 15) from being tilted by temperature variation.

Since a coupling method using no adhesive, such as the anodic bonding, the optical contact or the diffusion bonding described above, is employed for coupling the rigid members 33 and 34 to the plate spring portions 31 and 32, it is possible to eliminate manufacturing errors (produced by the influence of contraction of an adhesive at the time of manufacturing) that are made when an adhesive is used, and it is possible to realize a high resolution produced by highly accurate interference without any provision of a large corner cube when the drive mechanism 18 is applied to the interferometer 1 or the spectroscopic analysis device. In other words, it is possible to realize a high resolution produced by highly accurate interference while reducing the size of the interferometer 1 and hence the spectroscopic analysis device.

The plate spring portions 31 and 32 may be formed with flat plates made of metal (such as iron, aluminum or alloy) instead of the silicon substrates 81 and the glass substrates 91 described above.

The rigid members 33 and 34 described above may be formed not of glass but of silicon. Here, when the coupling portion of the plate spring portions 31 and 32 and the rigid members 33 and 34 is formed by coupling of silicon to glass, the anodic bonding can be used as the joining method whereas, when the coupling portion is formed by coupling of silicon to silicon, the optical contact or the diffusion bonding can be used as the joining method.

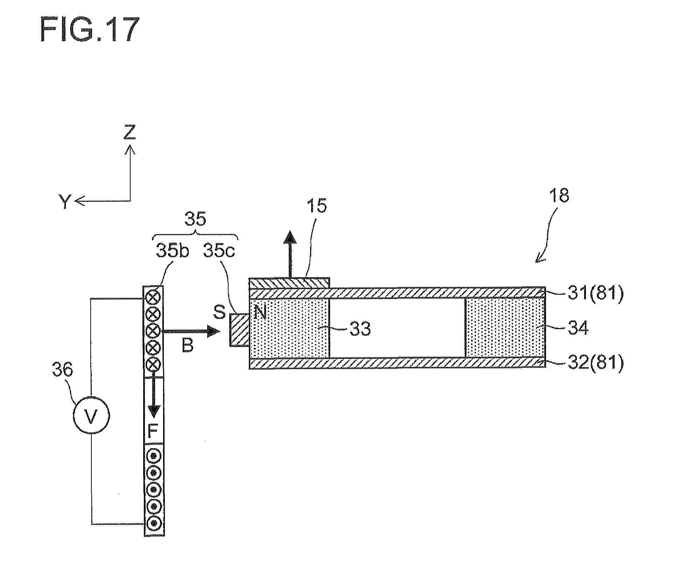

Fig. 17 is a cross-sectional view showing yet another configuration of the drive mechanism 18. The drive portion 35 of the drive mechanism 18 may be formed with the electromagnetic drive source. The drive portion 35 is formed with a coil 35b and a magnet 35c. In the coil 35b, one copper wire is wound several times, and one end and the other end thereof are connected to the voltage application portion 36. The coil 35b is arranged (fixed) separately from the magnet 35c provided on the side surface of the rigid member 33 such that the coil 35b is opposite the magnet 35c. The magnet 35c is provided on the side surface of the rigid member 33 with its north pole on the side of the rigid member 33 and its south pole on the side of the coil 35b. Hence, between the coil 35b and the magnet 35c, the direction in which the coil 35b points to the magnet 35c is the direction of a magnetic field B.

In the configuration described above, when a current is passed from the voltage application portion 36 to the coil 35b, for example, in a direction perpendicular to the plane of Fig. 17, that is, when a current is passed from the front to the back, a force F acting downward in the figure is exerted on the coil 35b by the Fleming's left-hand rule and a relationship between the direction of the current and the direction of the magnetic field B. By contrast, when a current is passed from the back to the front of the plane of Fig. 17, a force F acting upward in the figure is exerted on the coil 35b. In fact, since the coil 35b is fixed, when the direction of the current passed through the coil 35b is made to alternate, the rigid member 33 on the side of the magnet 35c is moved upward and downward. Hence, as described above, the drive portion 35 is formed with the electromagnetic drive source, and the current passed through the coil 35b is controlled, and thus it is possible to resonate the two plate spring portions 31 and 32 through the rigid member 33, with the result that it is possible to resonantly drive the moving mirror 15.

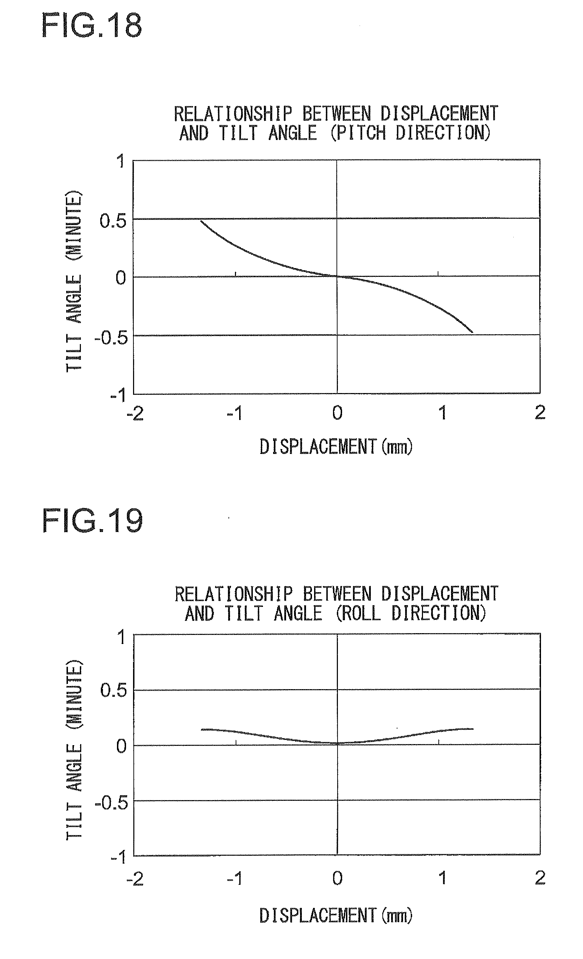

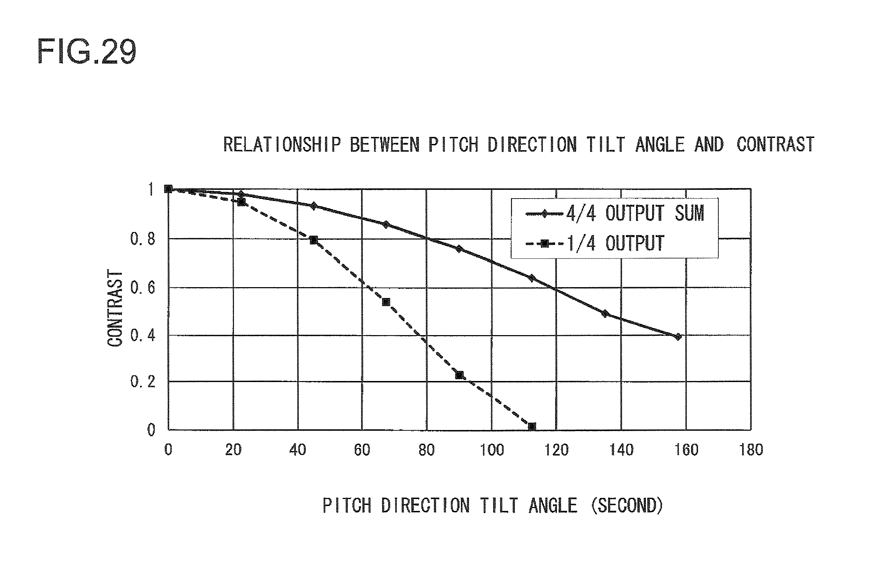

[3. Performance when the moving mirror is resonantly driven] Performance when the moving mirror 15 is resonantly driven by the drive mechanism 18 configured as described above will now be described. Figs. 18 and 19 each shows a relationship between the displacement of the moving mirror and the amount of tilt error (tilt angle) when the moving mirror is driven a distance of $\pm$ 1.5 mm in the Z direction by the drive mechanism 18; Fig. 18 shows the amount of tilt error in a pitch direction; Fig. 29 shows the amount of tilt error in a roll direction.

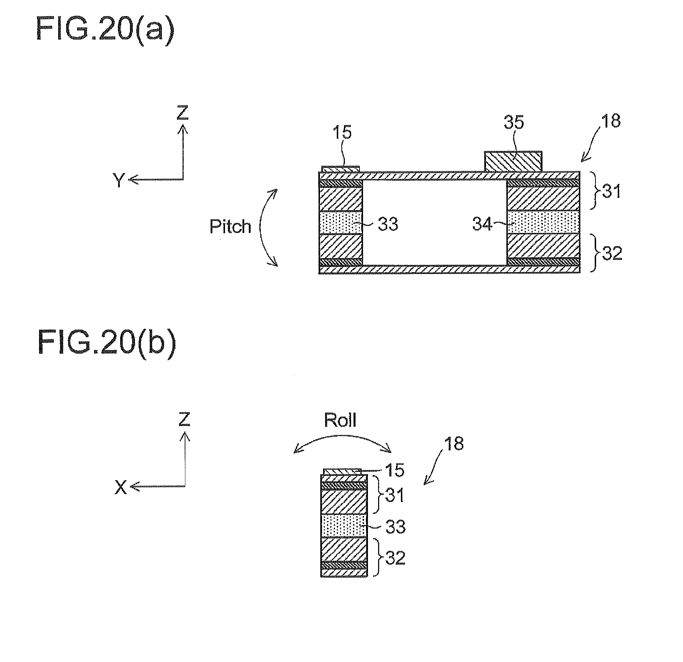

Here, Figs 20(a) and 20(b) show the pitch direction and the roll direction that are the directions of tilt of the moving mirror 15. The pitch and roll directions are defined as follows. Specifically, in the configuration where the direction in which the plate spring portion 31 of the drive mechanism 18 is extended and provided (the direction in which the rigid members 33 and 34 are aligned) is assumed to be the Y direction and where the moving mirror 15 is made to undergo parallel movement in the Z direction by the resonance of the plate spring portion 31, when a direction perpendicular to a YZ plane is assumed to be the X direction, the pitch direction is the direction of tilt when the moving mirror 15 is tilted within the YZ plane, and the roll direction is the direction of tilt when the moving mirror 15 is tilted within a ZX plane.

When the moving mirror 15 is translated a distance of $\pm$ 1.5 mm in the Z direction, Fig. 18 shows that a tilt error of about $\pm$ 0.5 minute in the pitch direction is left, and Fig. 19 shows that a tilt error of about 0.2 minute in the roll direction is left. Factors causing the tilt error in the pitch direction probably include, for example, an error of the thickness of the parallel plate spring in the Z direction, a tilt toward the side of the end of the parallel movement portion, an error of the thickness of the parallel movement portion and the holding portion in the Z direction and a decrease in the planarity of the parallel movement portion and the holding portion. On the other hand, factors causing the tilt error in the roll direction includes, for example, an error of the thickness of the parallel movement portion in the X direction, an error of the shift of the parallel plate spring and the parallel movement portion in the X direction, an error of the adherence of the piezoelectric element 35a in the X direction and a torsion of the parallel plate spring in the roll direction.

The parallel plate spring described above refers to a portion of the plate spring portions 31 and 32 that practically functions as a spring by being deformed; specifically, the parallel plate spring refers to the flat plate portion 31p of the plate spring portion 31 and the flat plate portion 32p of the plate spring portion 32. The parallel movement portion described above is a portion of the parallel plate spring that undergoes parallel movement by being deformed; specifically, the parallel movement portion refers to, for example, in the configuration of Fig. 5, the support layer 31a, the insulating oxide film layer $31b_1$ and the active layer $31c_1$ of the plate spring portion 31, the support layer $32a_1$, the insulating oxide film layer $32b_1$ and the active layer $32c_1$ of the plate spring portion 32 and the rigid member 33. The support layer described above refers to the support layer $31a_2$, the insulating oxide film layer $31b_2$, the active layer $31c_2$, the support

layer $32a_2$, the insulating oxide film layer $32b_2$, the active layer $32c_2$ and the rigid member 34.

In the present embodiment, the fixed mirror 14 is non-resonantly driven by the optical path correction device 102 of the tilt correction portion 100 described above, and thus the tilt error caused by the resonant drive of the moving mirror 15 during the spectroscopic measurement is corrected. The optical path correction device 102 can correct not only the tilt error caused during the spectroscopic measurement but also a tilt error (an initial tilt error) caused by aging variation and temperature variation before the spectroscopic measurement. The optical path correction device 102 will be described in detail below.

[4. Details of the optical path correction device]

(4-1. Configuration of the optical path correction device)

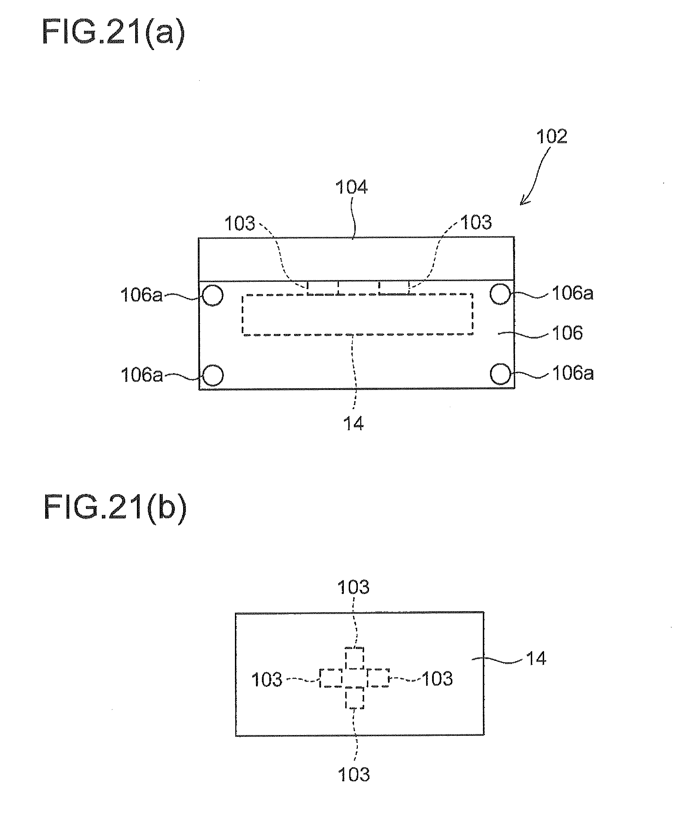

Fig. 21 (a) is a side view showing a schematic configuration of the optical path correction device 102; Fig. 21 (b) is a plan view of the fixed mirror 14 supported by the optical path correction device 102. The optical path correction device 102 has a plurality of piezoelectric elements 103 (four elements in Fig. 21(b)) that expand and contract by the application of a voltage. One end surface of each of the piezoelectric elements 103 in the direction of expansion and contraction is coupled to the fixed mirror 14 whereas the other end surface is coupled to a fixing stage 104, with the result that each of the piezoelectric elements 103 is supported. The piezoelectric elements 103 are spaced regularly (by 90 degrees) in a circumferential direction with respect to an axis passing through the center of the bottom surface of the fixed mirror 14. Consequently, two piezoelectric elements 103 are arranged opposite each other with respect to the axis, and two pairs of piezoelectric elements 103 arranged opposite each other are present.

Here, when the moving mirror 15 is resonantly driven at a resonance frequency of, for example, 70 Hz, if the tilt error of the moving mirror 15 includes up to a quartic high-frequency component, the optical path correction device 102 is required to be capable of performing a non-resonant drive (a servo-drive, which will be described later) at 280 Hz. Hence, in the present embodiment, a high-speed response is realized by using a plurality of stacked piezoelectric elements 103. Four piezoelectric elements 103 are used, and thus, with each pair of piezoelectric elements, it is possible to correct the tilt error (tilt correction) in each of the pitch and roll directions. This will be specifically described below. Even with three piezoelectric elements 103, it is possible to perform the tilt correction.

The voltage that can be applied to the piezoelectric elements 103 is assumed to be 150 volts; in order to have a little margin for 150 volts mentioned above, the optical path correction device 102 is designed such that it is possible to adjust the application of a voltage of up to 100 volts. When the mechanical tilt error (design error) on the side of the fixed mirror 14 and the side of the moving mirror 15 is zero, an application voltage to each of the piezoelectric elements 103 is set at, for example, 50 volts. On the other hand, when the tilt error is present in each of the pitch and roll directions, a voltage of 50 volts or more is applied to one of the piezoelectric elements 103 arranged opposite each other, and a voltage of 50 volts or less is applied to the other, and thus the one piezoelectric element 103 expands and the other piezoelectric element 103 contracts, with the result that it is possible to tilt the fixed mirror 14. The piezoelectric element 103 having a length of about 5 mm is utilized, and the opposite piezoelectric elements 103 are arranged a distance of 2 mm apart, and thus it is possible to adjust a tilt of about ± 4 minutes.

In the spectroscopic analysis device, the initial tilt error is measured before the spectroscopic measurement, and the piezoelectric elements 103 are made to expand and contract to adjust the tilt of the fixed mirror 14 such that the tilt error mentioned above is about ± 0.2 minute. The details of the tilt correction before the spectroscopic measurement will be described later. Thereafter, in the spectroscopic measurement, the moving mirror 15 is translated and driven (resonated), the fixed mirror 14 is non-resonantly driven by the expansion and contraction of each of the piezoelectric elements 103 while a tilt error caused by the drive of the moving mirror 15 is being monitored in real time and a servo-drive is performed such that the tilt error is constantly zero.

Fig. 22 is a block diagram showing feedback control (servo control) performed when the fixed mirror 14 is non-resonantly driven during the spectroscopic measurement. As shown in the figure, the optical path correction device 102 includes not only the piezoelectric elements 103 described above but also a PID controller 105. The PID controller 105 is a controller that performs control obtained by combining a proportional action, an integral action and a differential action, controls the application of a voltage to each of the piezoelectric elements 103 based on the amount of tilt (tilt error) detected by the signal processing portion 101 and a servo target value (zero tilt amount) such that the amount of tilt approaches the target value (constantly remains zero) and adjusts the tilt of the fixed mirror 14 by the expansion and contraction of each of the piezoelectric elements 103 caused by a non-resonant drive. With the feedback control described above, even if the tilt error varies according to the movement of the moving mirror 15, it is possible to properly correct the tilt error. In the present embodiment, the PID control described above is performed in each of the pitch and roll directions. Consequently, the tilt error during the spectroscopic measurement is constantly ± 0.1 minute or less in each of the pitch and roll directions.

Since it is not easy to mechanically adjust the axis of the second light detector 24 (four-division sensor) in each of the pitch and roll directions and the axis of the fixed mirror 14 in each of the pitch and roll directions at the time of tilt correction, practically, axis transformation computation means such as a microcomputer is used to transform the former axis into the latter axis.

Incidentally, as shown in Fig. 21 (a), the optical path correction device 102 further includes an attachment frame 106. The attachment frame 106 is an attachment member that attaches the optical path correction device 102 to the interferometer 1, and is provided on the fixing stage 104 so as to enclose the fixed mirror 14 from the sides. In each of the four surfaces of the attachment frame 106, a plurality of holes 106a for position adjustment at the time of attachment to the interferometer 1 are provided. The diameter of the hole 106a is slightly larger than that of a screw put into the hole. Hence, when the attachment frame 106 is screwed to the interferometer 1, it is possible to finely adjust the position of the attachment frame 106.

In this way, it is possible to finely adjust the attachment position of the optical path correction device 102 to the interferometer 1, that is, the position of the fixed mirror 14, and to perform tilt correction before the shipment of products. For example, at the time of the shipment of the products, when the errors of the assembly of individual blocks are combined to cause a tilt error of $\pm$ 15 minutes, it is possible to adjust the tilt error of the moving mirror 15 into a level of $\pm$ 1 minute by mechanically adjusting the attachment position described above.

(4-2. Another configuration of the optical path correction device)

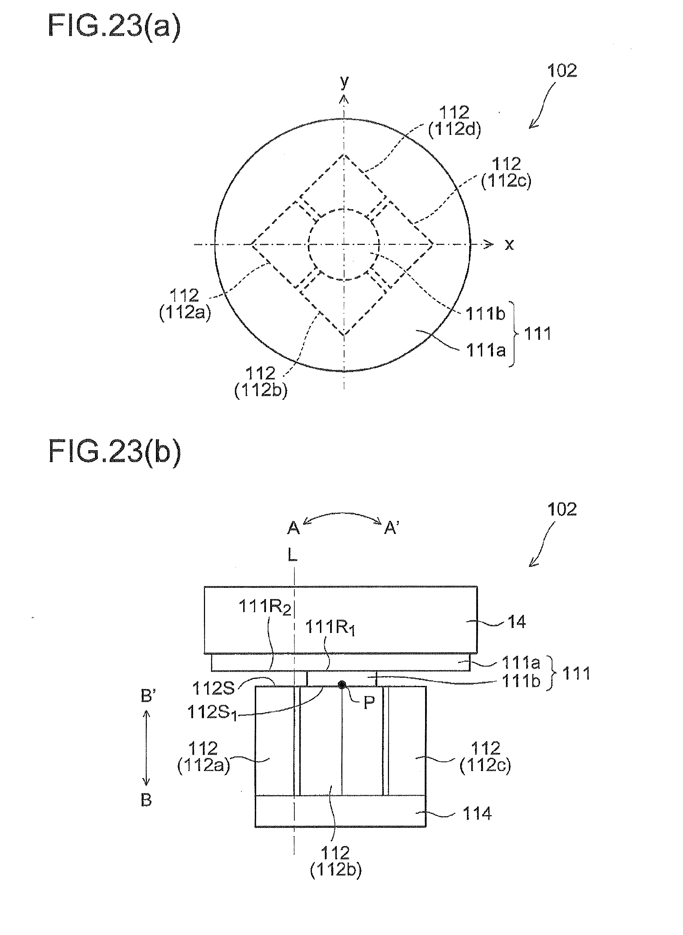

Fig. 23(a) is a plan view showing another configuration of the optical path correction device 102; Fig. 23(b) is a side view of the optical path correction device 102 described above. In Fig. 23(a), the fixed mirror 14 is omitted for convenience. The optical path correction device 102 shown in Figs. 23(a) and 23(b) can also be applied to the interferometer 1 and the spectroscopic analysis device.

The optical path correction device 102 includes a rotational member 111 that rotates while supporting the fixed mirror 14. The rotational member 111 is formed with a mirror support stage which is shaped such that two cylinder portions 111a and 111b formed of metal such as stainless steel and having different diameters are coupled to each other at the same axis and at the axis passing through a rotational center P. The diameter of the cylinder portion 111a having a larger diameter is substantially equal to that of the fixed mirror 14 (here, which is assumed to be formed in the shape of a disc), and the fixed mirror 14 is supported by the end surface of the cylinder portion 111 a on the opposite side to the cylinder portion 111b. On the other hand, onto the end surface of the cylinder portion 111b having a smaller diameter on the opposite side to the cylinder portion 111a having a larger diameter, four piezoelectric elements 112 (112a to 112d) that are bound through minute gaps and that are formed in the shape of a quadrangular prism are adhered. The radius of the cylinder portion 111b having a smaller diameter is set at approximately half the length of one side of the cross section of the piezoelectric elements 112.

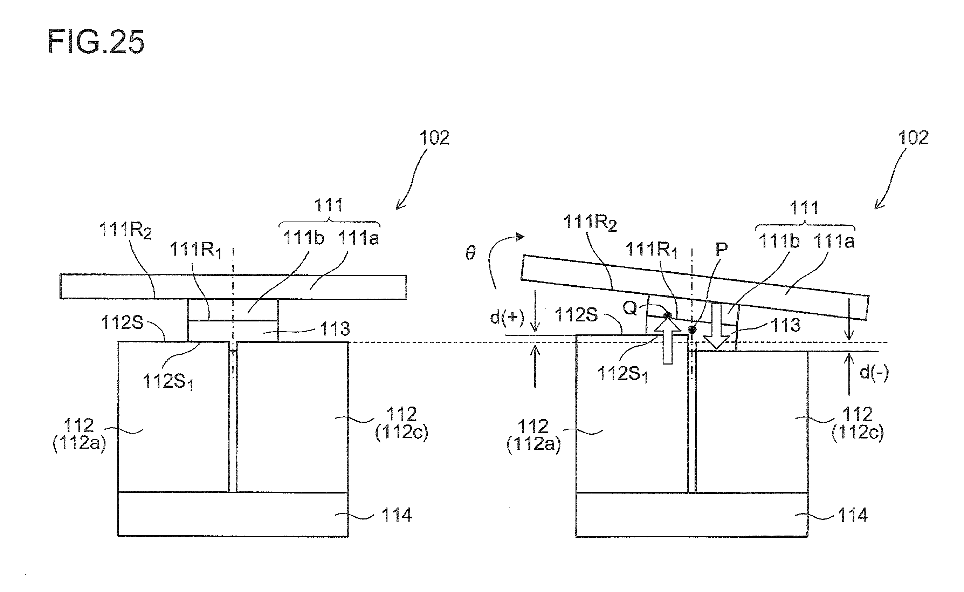

The piezoelectric element 112 is a displacement member that expands and contracts, by the application of a voltage, in a direction corresponding to the direction in which the rotational member 111 is rotated. The piezoelectric element 112 is coupled to the rotational member 111 through an adhesive 113 (see Fig. 25) only at a region $112S_1$ that is part of an end surface $112S$ perpendicular to the direction of the expansion and contraction. Thus, when the region of the rotational member 111 opposite the end surface $112S$ of the piezoelectric element 112 is divided into a first region $111R_1$ closer to the rotational center P and a second region $111R_2$, farther from the rotational center P, the piezoelectric element 112 presses, at the time of expansion by the application of a voltage, the first region $111R_1$ of the rotational member 111 through the adhesive 113 at the region $112S_1$ that is part of the end surface $112S$, and thereby can rotate the rotational member 111.

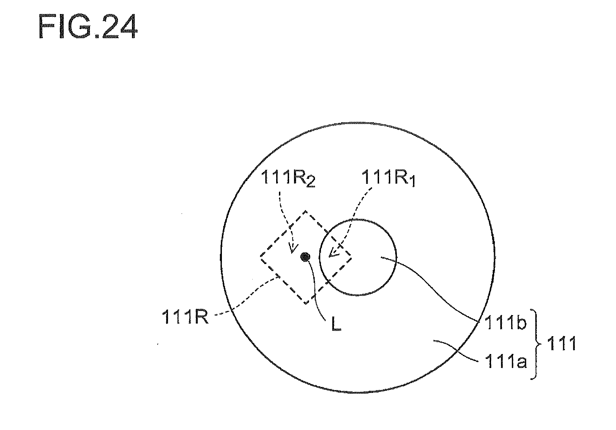

Here, Fig. 24 is a bottom view of the rotational member 111 as seen from the side of the piezoelectric element 112. The first region $111R_1$ and the second region $111R_2$ will be described in further details. When a region of the rotational member 111 opposite the end surface $112S$ of the piezoelectric element 112 is assumed to be 111R, the first region $111R_1$ is a region of the region 111R that is positioned on the end surface of the smaller-diameter cylinder portion 111b of the rotational member 111, and that is closer to the rotational center P (see Fig. 23(b)) of the rotational member 111 than a center axis L which passes through the center of the end surface $112S$ of the piezoelectric element 112 and which is along the direction of the expansion and contraction. On the other hand, the second region $111R_2$ is a region which is the remaining region of the region 111R, that is, which is positioned on the end surface of the larger-diameter cylinder portion 111a. In this way, the region 111R is divided into the first region $111R_1$, which is closer to the rotational center P, and the second region $111R_2$, which is farther from the rotational center P.

In order to press the different regions of the rotational member 111, as described above, a plurality of (four in the present embodiment) piezoelectric elements 112 are provided. The direction of the expansion and contraction of each of the piezoelectric elements 112a to 112d corresponds to the direction of rotation of the rotational member 111; Fig. 23(b) shows, as an example, the correspondence of the direction (B-B' direction) of the expansion and contraction of the piezoelectric elements 112a and 112c to the direction (A-A' direction) of rotation of the rotational member 111. The piezoelectric element 112a and the piezoelectric element 112c and the piezoelectric element 112b and the piezoelectric element 112d are arranged opposite each other with respect to the axis passing through the rotational center P of the rotational member 111. The individual piezoelectric elements 112 are adhered through an epoxy adhesive to a fixing stage 104 made of metal such as stainless steel over the entire end surface on the opposite side to the rotational member 111.

The above-described method of pressing the rotational member 111 by the piezoelectric element 112 is common to all the piezoelectric elements 112a to 112d. Hence, the first region $111R_1$ and the second region $111 R_2$ of the rotational member 111 described above are provided to correspond to the piezoelectric elements 112a to 112d, and each of the piezoelectric elements 112a to 112d press, when they expand, the corresponding first region $111R_1$ through the adhesive 113 and thereby rotate the rotational member 111.

The adhesive 113 described above is a coupling member that adheres and couples each piezoelectric element 112 to the rotational member 111. The connected portion (coupled portion) by the adhesive 113 is an important portion for determining the characteristics of the optical path correction device 102; in the present embodiment, an epoxy adhesive having a relatively large Young's modulus, an epoxy-modified silicone adhesive having an appropriate elasticity or the like is selected as the adhesive according to the specifications. Since the thickness of the adhesive 113 is also important, plastic beads that have the same diameter and are spherical are preferably mixed with the adhesive 113. In the present embodiment, as the adhesive 113, an epoxy adhesive in which plastic beads having a diameter of 30 $\mu$m are mixed is used.

The individual piezoelectric elements 112 described above are connected to the voltage application portion (not shown); the application of a voltage to the piezoelectric elements 112a to 112d is individually controlled, and thus it is possible to individually expand and contract the piezoelectric elements 112a to 112d.

Fig. 25 is a side view of the optical path correction device 102, and shows the posture of the rotational member 111 before and after the rotation. In Fig. 25, the piezoelectric element 112b is omitted for convenience. A voltage of + v (V) is applied to the piezoelectric element 112a; the piezoelectric element 112a expands only a distance of d (mm) (a displacement of d (+)). On the other hand, a voltage of - v (V) is applied to the piezoelectric element 112c; the piezoelectric element 112c contracts only a distance of d (mm) (a displacement of d (-)). Thus, the piezoelectric element 112a presses the cylinder portion 111 b of the rotational member 111 through the adhesive 113, and the entire rotational member 111 is rotated, while supporting the fixed mirror 14, about the rotational center P only by a rotational angle $\theta$ (°) around the y axis shown in Fig. 23(a). The rotational center P when the rotational member 111 is rotated is determined by the mechanics relationship of the constituent members.

On the other hand, when the fixed mirror 14 is rotated around the x axis shown in Fig. 23(a), voltages whose phases are displaced 180° are preferably applied to the piezoelectric element 112b and the piezoelectric element 112d. Thus, according to the same principles as the y axis rotation, it is possible to rotate, while supporting the fixed mirror 14, the rotational member 111 about the rotational center P around the x axis.

Although here, the fixed mirror 14 and the rotational member 111 are rotated around the y axis and the x axis, it is possible to realize an arbitrary oscillating movement by combing the rotation around the y axis with the rotation around the x axis. Thus, it is possible to properly perform the tilt correction. For example, when four piezoelectric elements 112 having a 1.65 mm x 1.65 mm cross section are used, the radius of the smaller-diameter cylinder portion 111b, that is, the distance from the axis passing through the rotational center P to the circumference of the first region $111R_1$ is set at 0.7 mm and the fixed mirror 14 is non-resonantly driven, it is possible to perform a tilt correction of $\pm$ 7 minutes with a small configuration.

Although, in the above description, the tilt correction by the optical path correction device 102 is performed on the fixed mirror 14, it is also possible to perform it on the moving mirror 15 or to perform it on both the fluxed mirror 14 and the moving mirror 15. For example, one end surface of each of the piezoelectric elements 103 of the optical path correction device 102 is coupled to the stage of the drive mechanism 18, and thus it is possible to perform the tilt correction by non-resonantly driving the moving mirror 15 through the expansion and contraction of the piezoelectric elements 103.

[5. Procedure of the tilt correction]

The procedure of the tilt correction of the present embodiment will now be described in detail.

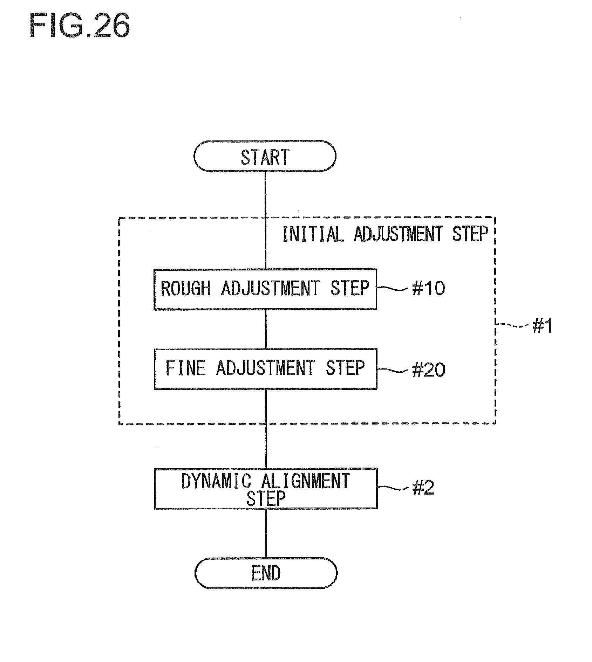

As described above, as the tilt error (the tilt error, i.e. the relative tilt of the two reflected light beams) showing the angular displacement from the optimal interference state of the light beam reflected off the moving mirror 15 and the light beam reflected off the fixed mirror 14, there are two types of tilt errors, that is, the initial tilt error caused by aging variation before the spectroscopic measurement or the like and the tilt error caused by the translating and driving of the moving mirror 15 during the spectroscopic measurement. Hence, in the present embodiment, as shown in Fig. 26, before the spectroscopic measurement, an initial adjustment step (#1) of correcting the initial tilt error is performed; during the spectroscopic measurement, a dynamic alignment step (#2) of correcting, in real time, the tilt error caused by the movement of the moving mirror 15 is performed. Here, the initial adjustment step of #1 is composed of a rough adjustment step (#10) and a fine adjustment step (#20); the initial tilt error is significantly corrected in the rough adjustment step, and is then finely corrected in the fine adjustment step. The individual steps will be described in detail below.

[5-1. Rough adjustment step]

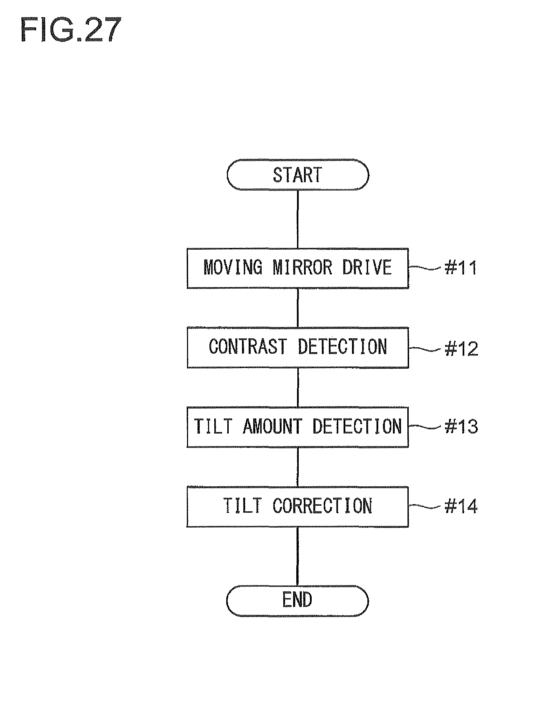

Fig. 27 is a flowchart showing the detailed flow of the rough adjustment step in the initial adjustment step. In the rough adjustment step, while the moving mirror 15 is being driven (#11), laser interfering light is first detected with the second light detector 24 (four-division sensor), variations in the contrast of the interfering light here are detected (#12) and the tilt error (the amount of tilt) is detected based on variations in the contrast (#13). Then, the tilt error is corrected by non-resonantly driving the moving mirror 15 through the expansion and contraction of the piezoelectric elements 103 or the like described above (#14). The contrast refers to an intensity ratio between the light and dark of the interfering light; as the difference between the light and dark is increased, the contrast is increased.

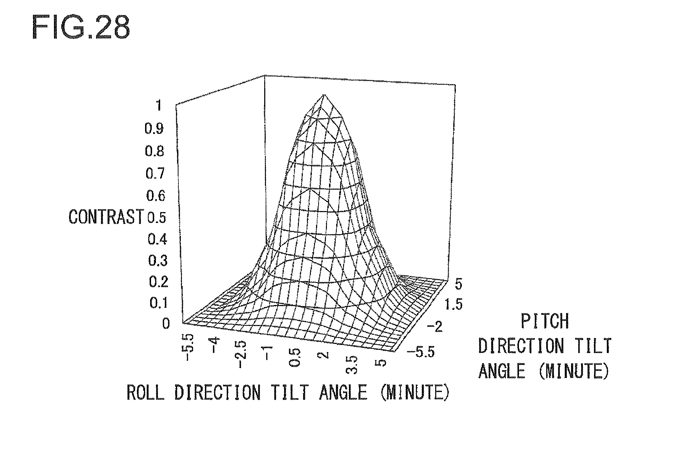

Fig. 28 shows the relative tilt (the tilt error) of the light beam reflected off the moving mirror 15 with respect to the light beam reflected off the fixed mirror 14 and a relationship with the contrast at that time. The figure shows that, when the relative tilt of the two reflected light beams is zero in the pitch direction and the roll direction, the contrast is the largest (for example, 1), and that, even when the relative tilt of the two reflected light beams is produced in each of the directions, the contrast is decreased. Hence, while the contrast of the interfering light is being detected, the fixed mirror 14 is driven with, for example, 0.5 minute pitches in the pitch direction and the roll direction, and thus it is possible to search for the position of the fixed mirror 14 in which the highest contrast is obtained, with the result that it is possible to significantly correct the initial tilt error. At the beginning, the fixed mirror 14 is driven with 1 minute pitches in the pitch direction and the roll direction, thereafter the fixed mirror 14 is driven with 0.5 minute pitches to search for the position in which the highest contrast is obtained, and thus the initial tilt correction may be significantly corrected.

Here, in the present embodiment, when the contrast of the interfering light is detected, the outputs of the division elements of the four-division sensor are totalized. This is for the following reason.

Fig. 29 shows a relationship between the relative tilt of the two reflected light beams and the contrast of the interfering light detected by totalizing the outputs of the division elements of the four-division sensor, and a relationship between the relative tilt of the two reflected light beams and the contrast of the interfering light detected from only the output of one division element. Here, the diameter of a beam of the interfering light is assumed to be, for example, $\phi$ 1.65 mm, and the diameter of the beam mentioned above is regulated to be, for example, $\phi$ 1 mm with an aperture arranged before the second light detector 24. When the contrast is detected by totalizing the outputs of the division elements, it is found that, even if the relative tilt of the two reflected light beams is changed to 160 seconds (about 3 minutes), it is possible to detect variations in the contrast (in the figure, the variations ranges from 0.4 to 1). On the contrary, this means that the possible range of the detection of the relative tilt of the two reflected light beams based on variations in the contrast is so wide as to be 160 seconds.

By contrast, when the contrast is detected from only the output of one division element, if the relative tilt of the two reflected light beams is changed to 120 seconds, the contrast becomes zero, with the result that it is impossible to detect the contrast when the tilt is more than 120 seconds. Hence, the range in which the tilt can be changed is 120 second or less. In other words, the possible range of the detection of the tilt is narrower in the former than in the latter. This is because, as the light reception area of the sensor is decreased for the constant diameter of the beam of the interfering light, the sensitivity to variations in the contrast is increased, and variations in the output (amplitude) are increased.

As described above, since in the rough adjustment step, the contrast of the interfering light is detected by totalizing the outputs of the division elements, and thus the amount of variation in contrast of the interfering light with variations in the relative tilt of the two reflected light beams is decreased, it is possible to contrarily widen the possible range of the detection of the relative tilt (the tilt amount) of the two reflected light beams based on variations in the contrast of the interfering light. Hence, even when the initial tilt error is increased by aging variation or the like, in the rough adjustment step, it is possible to reliably detect and correct such a large initial tilt error.

In the rough adjustment step, the possible range of the detection of the tilt of the fixed mirror 14 based on variations in the contrast is so widened as to be about 3 minutes, and thus as shown in Fig. 29, variations in the contrast with variations in the tilt are decreased. Thus, it is impossible to detect, based on variations in the contrast, the tilt of the fixed mirror 14 with pitches of 0.2 minute or less. The minimum value of the pitch (in the above example, 0.2 minute) with which it is possible to detect the tilt of the fixed mirror 14, as described above, is also referred to as resolution.

[5-2. Fine adjustment step]

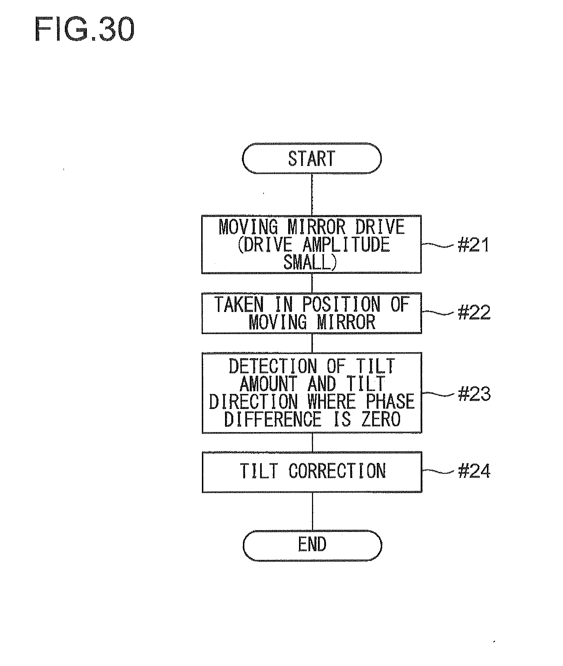

The fine adjustment step in the initial adjustment step will now be described. Fig. 30 is a flowchart showing the detailed flow of the fine adjustment step. In the fine adjustment step, while the moving mirror 15 is finely driven such that the phase difference (difference in the optical paths) between the moving mirror 15 and the fixed mirror 14 approaches zero (#21), laser interfering light is first detected with the second light detector 24 (four-division sensor), and the position of the moving mirror 15 here is detected (#22). Then, the relative tilt (the tilt amount) of and the direction of relative tilt (the tilt direction) of the two reflected light beams when the phase difference is near zero are detected (#23). Then, the tilt error is corrected by non-resonantly driving the fixed mirror 14 through the expansion and contraction of the piezoelectric elements 103 or the like described above (#24).

Here, in #21, in a range that is one-tenth or less as wide as the maximum drive amplitude when the moving mirror 15 is driven to be reciprocated (within a range of ± 0.2 mm while the position where the phase difference is zero is being kept in the center), the moving mirror 15 is driven. Within the range of the movement of the moving mirror 15 described above, the moving mirror 15 is driven while it is substantially at rest, and the phase difference between the two reflected light beams approaches zero.

Since in the position of the moving mirror 15 where the phase difference is near zero, the amount of movement of the moving mirror 15 is substantially zero, it is almost unnecessary to consider the tilt error caused by the movement of the moving mirror 15. The tilt error caused here can be considered to be substantially equal to the remaining tilt error that has not been able to be corrected in the rough adjustment step, among the initial tilt error caused by aging variation or the like. Hence, in #23, it is possible to detect the remaining tilt error (the tilt amount, the tilt direction) that has not been able to be corrected in the rough adjustment step.

Moreover, in #23, based on the phase difference between the outputs of the division elements when the four-division sensor receives the interfering light of the two reflected light beams, the relative tilt amount of and the tilt direction of the two reflected light beams are detected.

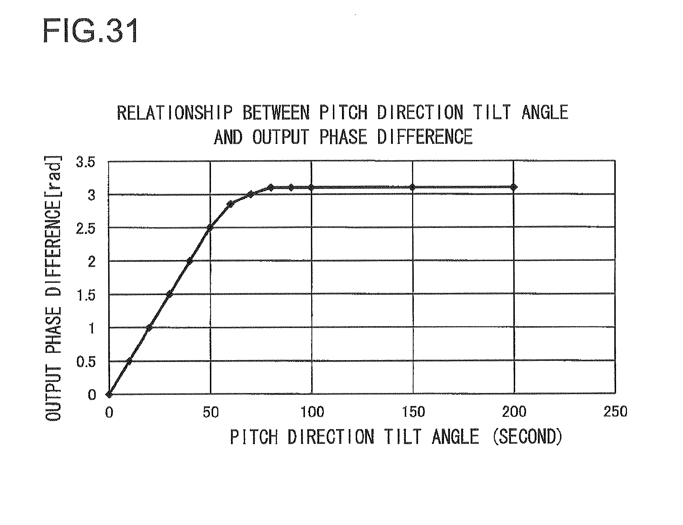

Fig. 31 shows a relationship between the relative tilt of the two reflected light beams in, for example, the pitch direction and the phase difference between the outputs of two division elements adjacent in a direction corresponding to the pitch direction. As shown in the figure, it is possible to detect the tilt of about 60 seconds (1 minute) described above from the phase difference between the outputs of the division elements. In about a range of the tilt from 0 seconds to 60 seconds, since the amount of variation of the phase difference is large, it is also possible to detect the above tilt based on the phase difference with 0.01 minute pitches. For the roll direction, the same relationship as shown in Fig. 31 is obtained. As described above, in the fine adjustment step, it is possible to detect the tilt amount with a higher resolution than in the rough adjustment step. Moreover, since in the fine adjustment step, the phase difference between the outputs of the division elements is checked, it is also possible to detect the direction of tilt by determining in which two division elements the phase difference occurs.

Hence, in the fine adjustment step, based on the tilt amount and the tilt direction detected in #23, it is possible to perform, in #24, the tilt correction by tilting the fixed mirror 14 by a predetermined amount in a direction in which the initial tilt error is removed. Consequently, before the spectroscopic measurement, it is possible to remove the initial tilt error with a high degree of accuracy. Hence, in the spectroscopic measurement thereafter, in the dynamic alignment step during the spectroscopic measurement, it is possible to perform the spectroscopic analysis with a high degree of accuracy by correcting the tilt error caused by the movement of the moving mirror 15.

It is also possible to obtain the position of the moving mirror 15 where the phase difference is zero from, for example, an output of the first light detector 17 of the first optical system 10. When the measurement light input portion 11 of the first optical system 10 emits near-infrared light, in the position of the moving mirror 15 where the phase difference is zero, so-called center burst occurs in which the intensity of interference in light of any wavelength is the largest. Hence, the center burst is monitored based on the output of the first light detector 17, and thus it is possible to detect the position of the moving mirror 15 where the phase difference is zero.

In order for the tilt amount of and the tilt direction of the two reflected light beams to be detected, as shown in Fig. 2, the tilt amount and the tilt direction may be detected based on the phase difference between the sum of the outputs of a plurality of division elements (for example, the reception regions E1 and E2) and the sum of the outputs of a plurality of division elements (for example, the reception regions E3 and E4).

[5-3. Dynamic alignment step]

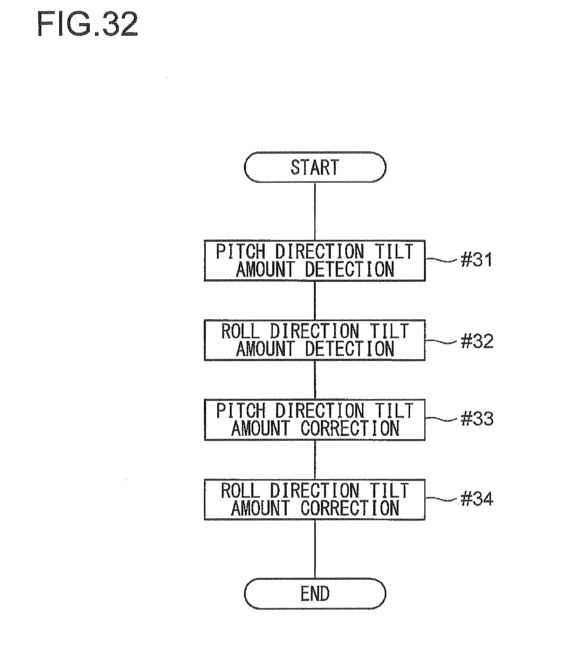

The dynamic alignment step will now be described. Fig. 32 is a flowchart showing the detailed flow of the dynamic alignment step. The dynamic alignment step is performed during the spectroscopic measurement in which, while the measurement light is being introduced from the measurement light input portion 11, the moving mirror 15 is translated and driven at the maximum amplitude, and is performed by the above-described feedback control (see Fig. 22) in each of the pitch and roll directions.

Specifically, during the spectroscopic measurement, based on the outputs of the division elements when the second interfering light is received by the second light detector 24 (four-division sensor), the tilt amount of and the tilt direction (each of the pitch and roll directions) of the two reflected light beams caused by the movement of the moving mirror 15 are detected in real time (#31 and #32), and the fixed mirror 14 is non-resonantly driven by the expansion and contraction of the piezoelectric elements 103 or the like, and thus the tilt error of the two reflected light beams is corrected (#33 and #34). The method of detecting the tilt amount and the tilt direction is completely the same as the fine adjustment step except that the moving mirror 15 is driven at the maximum amplitude. Specifically, based on the phase difference between the outputs of two division elements adjacent in a direction corresponding to the pitch direction, it is possible to detect the tilt amount in the pitch direction; based on the phase difference between the outputs of two division elements adjacent in a direction corresponding to the roll direction, it is possible to detect the tilt amount in the roll direction. Consequently, in the dynamic alignment step, in each of the pitch and roll directions, it is possible to reduce the tilt error to ± 0.1 minute or less.

The rough adjustment step, the fine adjustment step and the dynamic alignment step in the initial adjustment step described above are summarized in table 1.

[Table 1]

| Adjustment stage | Detection principle | Quantitative detection of tilt amount | Measurement range | Resolution | Detection of tilt direction |
|---|---|---|---|---|---|
| Initial adjustment (rough adjustment) | Sum of outputs of all division elements (contrast) | Possible | ± 3 minutes | 0.2 minute | Impossible |
| Initial adjustment (fine adjustment) | Difference between outputs of all division elements | Possible | ± 1 minute | 0.01 minute | Possible |
| Dynamic alignment (during spectroscopic measurement) | Difference between outputs of all division elements | Possible | ± 1 minute | 0.01 minute | Possible |

[6. Effects]

As described above, in the tilt correction method of the present embodiment, in the rough adjustment step, the contrast of the interfering light and its variations are detected by totalizing the outputs of the division elements (all the division elements), and thus it is possible to widen the range of detection of variations in the amount of tilt of the two reflected light beams based on variations in the contract of the interfering light. Hence, even when the initial tilt error is increased by aging variation or the like, in the rough adjustment step, it is possible to reliably detect and correct such a large initial tilt error.

Moreover, in the fine adjustment step, based on the phase difference between the outputs of the division elements when the interfering light of the two reflected light beams is received by the four-division sensor, the relative tilt amount of the two reflected light beams is detected, and thus it is possible to more finely detect the tilt amount than in the rough adjustment step. Furthermore, it is also possible to detect the tilt direction by selecting two division elements for checking the phase difference. In the fine adjustment step, it is therefore possible to perform the tilt correction with a higher resolution than in the rough adjustment step.

Moreover, in the fine adjustment step, since the tilt error is detected and corrected where the phase difference is substantially zero and almost no tilt error caused by the movement of the moving mirror 15 is produced, it is possible to reliably remove, in the fine adjustment step, the remaining initial tilt error that is not caused by the movement of the moving mirror 15 and that has not been able to be corrected in the rough adjustment step. In this way, it is possible to remove the initial tilt error with a high degree of accuracy before the spectroscopic analysis.

In the dynamic alignment step, it is possible to correct, in real time, the tilt error caused by the movement of the moving mirror 15 while performing the spectroscopic measurement. Although the moving mirror 15 is resonantly driven during the spectroscopic measurement, and thus it is possible to move the moving mirror 15 by a large displacement, when the movement amount of the moving mirror 15 is increased, it is difficult to acquire proper translation, with the result that a tilt error is more likely to be produced. Hence, the correction of the tilt error during the spectroscopic measurement in the dynamic alignment step is significantly effective especially when the moving mirror 15 is resonantly driven.

In the initial adjustment step (the rough adjustment step, the fine adjustment step) and the dynamic alignment step, the fixed mirror 14 is driven to correct the tilt error, and thus it is possible to separately configure the correction mechanism of the tilt error and the drive mechanism 18 of the moving mirror 15. Thus, it is possible to prevent the drive mechanism 18 of the moving mirror 15 from being complicated.

In the present embodiment, the fixed mirror 14 is non-resonantly driven to perform the tilt correction, and thus it is possible to easily perform the tilt correction. Here, it is possible to reliably realize the non-resonant drive of the fixed mirror 14 by the expansion and contraction of the piezoelectric elements 103 or the like.

The moving mirror 15 is non-resonantly driven by the drive mechanism 18 using the parallel plate spring (see Fig. 4 and the like). By using the parallel plate spring, it is possible to non-resonantly drive the moving mirror 15 with ease. Here, on the surface of the plate spring portion 31 among the two plate spring portions 31 and 32 that constitute the parallel plate spring, the piezoelectric element 35a is formed, and the moving mirror 15 is resonantly driven by the resonance of the two plate spring portions 31 and 32 caused by the expansion and contraction of the piezoelectric element 35a. With the parallel plate spring using the piezoelectric element 35a described above, it is possible to reliably realize the resonant drive of the moving mirror 15.

As shown in Fig. 7, the drive mechanism 18 may include the drive portion 35 having the coil 35b and the magnet 35c. The moving mirror 15 may be resonantly driven by resonating the two plate spring portions 31 and 32 through the control of a current passed through the coil 35b. In this case, with an electromagnetic method using the coil 35b and the magnet 35c as the drive portion 35, it is possible to reliably realize the resonant drive of the moving mirror 15.

[7. Others]

In the present embodiment, the case where light is applied to the specimen outside the interferometer, the light obtained through the specimen is made to enter the interferometer and spectroscopic analysis is performed has been described. However, for example, interfering light may be generated in the interferometer by using light introduced from the outside of the interferometer, and the spectroscopic analysis may be performed by applying the interfering light to the specimen; or light entering the interferometer from the outside thereof may be analyzed as a target. A measurement light source is arranged instead of the measurement light input portion 11 described in the present embodiment, and thus it is also possible to analyze the measurement light source. Furthermore, the interferometer may incorporate a measurement light source to apply measurement light emitted from the measurement light source to the specimen. Hence, the measurement light for obtaining the first interfering light may be either the light emitted from the light source incorporated in the interferometer or the light entering the interferometer from the outside thereof.

**Industrial Applicability**

The present invention can be utilized in a Fourier transform spectroscopic analysis device that uses a Michelson interferometer to perform spectroscopic analysis.

**List of Reference Symbols**

| | |
|---|---|
| 14 | fixed mirror |
| 15 | moving mirror |
| 18 | drive mechanism |
| 24 | second light detector (four-division mirror) |
| 31 | plate spring portion |
| 32 | plate spring portion |
| 35a | piezoelectric element |
| 35b | coil |
| 35c | magnet |
| 103 | piezoelectric element |
| 112 | piezoelectric element |

**Claims**

1. A tilt correction method of correcting a tilt error between a light beam reflected off a moving mirror and a light beam reflected off a fixed mirror in a spectroscope, the tilt correction method comprising:

an initial adjustment step that is performed before a spectroscopic measurement and that includes:

a rough adjustment step of detecting and correcting an initial tilt error of two reflected light beams; and
a fine adjustment step of more finely detecting and correcting the initial tilt error than the rough adjustment step; and

a dynamic alignment step that is performed during the spectroscopic measurement and that detects and corrects a tilt error of the two reflected light beams caused by movement of the moving mirror,
wherein, in the rough adjustment step, laser light is separated into two portions and the two portions are respectively guided to the moving mirror and the fixed mirror, and outputs of division elements when interfering light of the light beam reflected off the moving mirror and the light beam reflected off the fixed mirror is, while the moving mirror is being moved, received by a four-division sensor are totalized, and variations in contrast of the interfering light are detected, and
based on the variations in the contrast, a relative tilt amount of the two reflected light beams is detected and the initial tilt error is corrected, and
in the fme adjustment step, based on a phase difference between the outputs of the division elements when the interfering light of the two reflected light beams is received by the four-division sensor, the relative tilt amount of and a tilt direction of the two reflected light beams are detected, and the initial tilt error is corrected.

2.  The tilt correction method of claim 1,
wherein, in the fine adjustment step, in a movement range that is one-tenth or less as wide as a maximum drive amplitude when the moving mirror is driven to be reciprocated, the relative tilt amount of and the tilt direction of the two reflected light beams are detected, and the initial tilt error is corrected.

3.  The tilt correction method of claim 1 or 2,
wherein, in the dynamic alignment step, based on the outputs of the division elements when the interfering light of the two reflected light beams is received by the four-division sensor, the relative tilt amount of and the tilt direction of the two reflected light beams are detected, and the tilt error of the two reflected light beams caused by the movement of the moving mirror is corrected.

4.  The tilt correction method of any one of claims 1 to 3,
wherein a drive of the moving mirror during the spectroscopic measurement is a resonant drive.

5.  The tilt correction method of any one of claims 1 to 4,
wherein, in the initial adjustment step and the dynamic alignment step, the fixed mirror is driven to correct the tilt error.

6.  The tilt correction method of claim 5,
wherein, in the initial adjustment step and the dynamic alignment step, the fixed mirror is non-resonantly driven to correct the tilt error.

7.  The tilt correction method of claim 6,
wherein the fixed mirror is non-resonantly driven by expansion and contraction of a piezoelectric element.

8.  The tilt correction method of claim 4,
wherein the moving mirror is resonantly driven by a drive mechanism using a parallel plate spring.

9.  The tilt correction method of claim 8,
wherein a piezoelectric element is formed on a surface of at least one of two plate spring portions constituting the parallel plate spring, and
the moving mirror is resonantly driven by resonance of the two plate spring portions caused by expansion and contraction of the piezoelectric element.

10. The tilt correction method of claim 8,
wherein a magnet is arranged in the parallel plate spring, and a coil is arranged separately from the magnet, and
the moving mirror is resonantly driven by resonance of the two plate spring portions caused by controlling a current passed through the coil.

# FIG.1

SIGNAL PROCESSING PORTION — 101

OPTICAL PATH CORRECTION DEVICE — 102

}100

14

16

24

23

17

13

18

11 22

15

21

20

12

10

COMPUTATION PORTION — 2

OUTPUT PORTION — 3

1

# FIG.2

# FIG.3

FIG.4

FIG.5

# FIG.6

FIG.7

FIG.8

FIG.9

# FIG.10

# FIG.11

# FIG.12

**INITIAL OPERATION**
**(SEARCHING FOR RESONANCE FREQUENCY)**

START

START OF INCREASE IN VCO VOLTAGE — S1

MAXIMUM DISPLACEMENT DETECTION — S2

INCREASE IN VCO VOLTAGE — S4

MAXIMUM DISPLACEMENT LOWER THAN PREVIOUS? — S3

N

Y

STOP OF INCREASE IN VCO VOLTAGE — S5

END

31

# FIG.13

STEADY OPERATION
(FOLLOWING FREQUENCY)

## FIG.14

FIG.15

18

35(35a)

15

31(81)

31p

33                    34

32(81)

32p

FIG.16

18

35(35a)

15

31(91)

31p

33                    34

32(91)

32p

# FIG.17

# FIG.18

RELATIONSHIP BETWEEN DISPLACEMENT
AND TILT ANGLE (PITCH DIRECTION)

# FIG.19

RELATIONSHIP BETWEEN DISPLACEMENT
AND TILT ANGLE (ROLL DIRECTION)

FIG.20(a)

FIG.20(b)

FIG.21(a)

FIG.21(b)

# FIG.22

# FIG.23(a)

# FIG.23(b)

FIG.24

# FIG.25

EP 2 634 550 A1

# FIG.26

```
          ┌─────────────┐
          │    START    │
          └──────┬──────┘
                 │
  ┌ ─ ─ ─ ─ ─ ─ ─│─ ─ ─ ─ ─ ─ ─ ─ ─ ─ ─ ─ ┐
  │              │    INITIAL ADJUSTMENT STEP │
  │   ┌──────────┴───────────────┐           │
  │   │  ROUGH ADJUSTMENT STEP   │──── #10   │
  │   └──────────┬───────────────┘           │         #1
  │              │                           │
  │   ┌──────────┴───────────────┐           │
  │   │   FINE ADJUSTMENT STEP   │──── #20   │
  │   └──────────┬───────────────┘           │
  └ ─ ─ ─ ─ ─ ─ ─│─ ─ ─ ─ ─ ─ ─ ─ ─ ─ ─ ─ ┘
                 │
      ┌──────────┴───────────────┐
      │    DYNAMIC ALIGNMENT      │──── #2
      │          STEP            │
      └──────────┬───────────────┘
                 │
          ┌──────┴──────┐
          │     END     │
          └─────────────┘
```

# FIG.27

```
            ┌─────────────┐
            │    START     │
            └──────┬──────┘
                   │
         ┌─────────────────────┐
         │ MOVING MIRROR DRIVE │──── #11
         └──────────┬──────────┘
                    │
         ┌─────────────────────┐
         │ CONTRAST DETECTION  │──── #12
         └──────────┬──────────┘
                    │
         ┌──────────────────────┐
         │ TILT AMOUNT DETECTION│──── #13
         └──────────┬───────────┘
                    │
         ┌─────────────────────┐
         │  TILT CORRECTION    │──── #14
         └──────────┬──────────┘
                    │
            ┌─────────────┐
            │     END      │
            └─────────────┘
```

FIG.28

CONTRAST

ROLL DIRECTION TILT ANGLE (MINUTE)

PITCH
DIRECTION TILT
ANGLE (MINUTE)

# FIG.29

RELATIONSHIP BETWEEN PITCH DIRECTION TILT ANGLE AND CONTRAST

EP 2 634 550 A1

FIG.30

```
          ┌──────────────┐
          │    START     │
          └──────┬───────┘
                 │
   ┌─────────────────────────┐
   │  MOVING MIRROR DRIVE     │
   │   (DRIVE AMPLITUDE       │──── #21
   │       SMALL)             │
   └─────────────┬───────────┘
                 │
   ┌─────────────────────────┐
   │  TAKEN IN POSITION OF    │──── #22
   │     MOVING MIRROR        │
   └─────────────┬───────────┘
                 │
   ┌─────────────────────────┐
   │  DETECTION OF TILT       │
   │   AMOUNT AND TILT        │
   │ DIRECTION WHERE PHASE    │──── #23
   │  DIFFERENCE IS ZERO      │
   └─────────────┬───────────┘
                 │
   ┌─────────────────────────┐
   │    TILT CORRECTION       │──── #24
   └─────────────┬───────────┘
                 │
          ┌──────────────┐
          │     END      │
          └──────────────┘
```

# FIG.31

RELATIONSHIP BETWEEN PITCH DIRECTION TILT ANGLE
AND OUTPUT PHASE DIFFERENCE

# FIG.32

```
          ┌─────────────┐
          │    START    │
          └──────┬──────┘
                 │
      ┌──────────┴──────────┐
      │ PITCH DIRECTION TILT │───── #31
      │  AMOUNT DETECTION    │
      └──────────┬──────────┘
                 │
      ┌──────────┴──────────┐
      │  ROLL DIRECTION TILT │───── #32
      │  AMOUNT DETECTION    │
      └──────────┬──────────┘
                 │
      ┌──────────┴──────────┐
      │ PITCH DIRECTION TILT │───── #33
      │  AMOUNT CORRECTION   │
      └──────────┬──────────┘
                 │
      ┌──────────┴──────────┐
      │  ROLL DIRECTION TILT │───── #34
      │  AMOUNT CORRECTION   │
      └──────────┬──────────┘
                 │
          ┌──────┴──────┐
          │     END     │
          └─────────────┘
```

**INTERNATIONAL SEARCH REPORT**

| International application No. |
| --- |
| PCT/JP2011/066925 |

A.   CLASSIFICATION OF SUBJECT MATTER
*G01J3/45*(2006.01)i

According to International Patent Classification (IPC) or to both national classification and IPC

B.   FIELDS SEARCHED

Minimum documentation searched (classification system followed by classification symbols)
G01J3/00-G01J3/52, G02B26/00-G02B26/12

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2004-028609 A  (Shimadzu Corp.), 29 January 2004 (29.01.2004), paragraphs [0001] to [0005], [0016] to [0017]; fig. 5 | 1-10 |
| Y | JP 7-119564 B2  (Shimadzu Corp.), 20 December 1995 (20.12.1995), column 2, lines 6 to 14; column 5, lines 39 to 46; column 6, line 49 to column 7, line 6; fig. 2 | 1-10 |
| Y | B.M. Hoeling, *et.al.*, "Phase modulation at 125 kHz in a Michelson interferometer using an inexpensive piezoelectric stack driven at resonance" REVIEW OF SCIENTIFIC INSTRUMENTS, Volume 72, Number 3, 2001.03, Pages 1630-1633 *Abstract, Fig. 3* | 4,8-10 |

| ☒  Further documents are listed in the continuation of Box C. | ☒  See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 August, 2011 (16.08.11) | 30 August, 2011 (30.08.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/066925 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2005-169553 A (Canon Inc.),<br>30 June 2005 (30.06.2005),<br>paragraph [0004] | 5-7 |
| Y | JP 2-280111 A (Ricoh Co., Ltd.),<br>16 November 1990 (16.11.1990),<br>page 4, lower right column to page 5, lower<br>left column; fig. 1 | 8-10 |
| Y | WO 2009/057605 A1 (NHK Spring Co., Ltd.),<br>07 May 2009 (07.05.2009),<br>paragraphs [0023] to [0031]; fig. 2 to 6 | 8-10 |
| P,A | WO 2011/058874 A1 (Konica Minolta Holdings,<br>Inc.),<br>19 May 2011 (19.05.2011),<br>paragraphs [0051] to [0053] | 8-10 |
| A | JP 2001-194235 A (Yokogawa Electric Corp.),<br>19 July 2001 (19.07.2001),<br>paragraphs [0019] to [0031] | 4 |
| A | Y.Watanabe, *et.al.*, "Development of an<br>Electromagnetically Driven Optical MEMS Mirror<br>with Functions of Z-axis Vibration and X,Y<br>Bi-directional Tilting, and an application to<br>Low Coherent Optical Interferometer"<br>PROCEEDINGS OF THE 24TH SENSOR SYMPOSIUM ON<br>SENSORS, MICROMACHINES, AND APPLIED SYSTEMS<br>[ISBN: 978-4-88686-001-9], 2007.10.16,<br>Pages 363-366 | 1 |

Form PCT/ISA/210 (continuation of second sheet) (July 2009)

**INTERNATIONAL SEARCH REPORT**
Information on patent family members

| International application No. |
|---|
| PCT/JP2011/066925 |

| | | | |
|---|---|---|---|
| JP 2004-028609 A | 2004.01.29 | EP 1376050 A2 | 2004.01.02 |
| | | EP 1376050 A3 | 2005.12.14 |
| | | JP 4032841 B2 | 2008.01.16 |
| | | US 2004/066519 A1 | 2004.04.08 |
| JP 7-119564 B2 | 1995.12.20 | JP 2-253103 A | 1990.10.11 |
| JP 2005-169553 A | 2005.06.30 | (Family: none) | |
| JP 2-280111 A | 1990.11.16 | (Family: none) | |
| WO 2009/057605 A1 | 2009.05.07 | (Family: none) | |
| WO 2011/058874 A1 | 2011.05.19 | (Family: none) | |
| JP 2001-194235 A | 2001.07.19 | DE 10050802 A1 | 2001.05.23 |
| | | DE 10050802 B4 | 2007.12.13 |
| | | JP 4135054 B2 | 2008.08.20 |
| | | US 6322037 B1 | 2001.11.27 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004028609 A